(19) **Europäisches Patentamt**
**European Patent Office**
**Office européen des brevets**

(11) **EP 1 478 526 B1**

(12) **EUROPÄISCHE PATENTSCHRIFT**

(45) Veröffentlichungstag und Bekanntmachung des Hinweises auf die Patenterteilung:
**29.06.2005 Patentblatt 2005/26**

(51) Int Cl.⁷: **B60C 23/04**

(21) Anmeldenummer: 03744852.9

(86) Internationale Anmeldenummer:
**PCT/EP2003/003093**

(22) Anmeldetag: **25.03.2003**

(87) Internationale Veröffentlichungsnummer:
**WO 2003/080371 (02.10.2003 Gazette 2003/40)**

(54) **REIFENDRUCKÜBERWACHUNGSSYSTEM**

TYRE PRESSURE MONITORING SYSTEM

SYSTEME DE SURVEILLANCE DE LA PRESSION DES PNEUS

(84) Benannte Vertragsstaaten:
**DE**

(30) Priorität: **25.03.2002 DE 10213266**

(43) Veröffentlichungstag der Anmeldung:
**24.11.2004 Patentblatt 2004/48**

(60) Teilanmeldung:
**04028483.8 / 1 516 753**

(73) Patentinhaber: **Infineon Technologies AG**
**81669 München (DE)**

(72) Erfinder: **HAMMERSCHMIDT, Dirk**
**A-6504 Villach (AT)**

(74) Vertreter: **Zinkler, Franz, Dipl.-Ing. et al**
**Schoppe, Zimmermann, Stöckeler & Zinkler**
**Postfach 246**
**82043 Pullach bei München (DE)**

(56) Entgegenhaltungen:
**EP-A- 0 989 001          EP-A- 1 092 570**
**DE-A- 10 007 558        US-A- 5 335 540**
**US-A- 5 825 286**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf ein Drucksensorsystem, und insbesondere auf ein System zum Überwachen eines Reifendrucks in einem Fahrzeugreifen.

In der Fahrzeugtechnik werden immer größere Anstrengungen unternommen, um Reifendrucksensorsysteme zu entwickeln, mit denen automatisch der Reifendruck eines Kraftfahrzeuges, z. B. eines LKWs, PKWs oder Motorrads, erfasst werden kann. Mittels solcher Reifendrucksensorsysteme sollen Druckänderungen möglichst frühzeitig an eine Zentraleinheit, z. B. den Bordcomputer des Fahrzeugs, übermittelt werden, um so früh wie möglich Beschädigungen eines Reifens zu erkennen, bzw. den Fahrer ausreichend früh zu warnen, wenn Reifendruckänderungen vorliegen, da diese auf einen Gasverlust oder auf eine anomale Verformung des Reifens hinweisen. Damit kann der Fahrer eines Kraftfahrzeuges häufig noch ausreichend früh vor dem Platzen eines Fahrzeugreifens aufgrund einer Beschädigung oder auch vor einem sogenannten "schleichenden Platten" gewarnt werden. Ein derartiges System ist aus der Patentschrift US 5,335,540 bekannt.

Zur Messung und Überwachung der physikalischen Zustandsgrößen wie Druck und Temperatur in der Gasfüllung eines Fahrzeugreifens kommen üblicherweise batteriebetriebene Sensoranordnungen zum Einsatz, die aus dem Inneren des Reifens, vorzugsweise an der Felge, ihre Messwerte über eine Sendeeinheit drahtlos per Funk an eine außerhalb des Reifens angebrachte Empfangseinheit übermitteln. Die Empfangseinheit ist dabei beispielsweise mit dem Bordcomputer des Fahrzeugs verbunden. Aufgrund des notwendigen Batteriebetriebs der mit der Sendeeinheit versehenen Sensoranordnung ist die Lebensdauer derartiger Sensoranordnungen zur Reifendrucküberwachung jedoch äußerst begrenzt. Herkömmliche Sensoranordnungen zum Erfassen und Überwachen des Reifendrucks eines Fahrzeugreifens verwenden üblicherweise drei Hauptschaltungsblöcke. Der erste Schaltungsblock ist dabei ein Einschaltzeitgeber (wake up timer), der ständig in Betrieb ist und die weiteren Schaltungsblöcke der Reifendrucküberwachungseinrichtung, d. h. den Reifendrucksensor und die Sendeeinheit, unter definierten Bedingungen aktiviert. Der Reifendrucksensor stellt den zweiten Hauptschaltungsblock dar und ist dafür verantwortlich, den Reifendruck zu erfassen und in einen digitalen Messwert umzuwandeln, der den erfassten aktuellen Reifendruckmesswert wiedergibt. Den dritten Hauptschaltungsblock stellt die Sendeeinheit (Transmitter) der Reifendrucksensoranordnung dar, wobei die Sendeeinheit den jeweils erfassten Druckwert über eine Hochfrequenzfunkstrecke an die dem Bordcomputer zugeordnete Empfangseinheit überträgt.

Die bisher im Stand der Technik eingesetzten Reifendrucksensoranordnungen verwenden zusätzlich einen Beschleunigungssensor, um den jeweiligen Fahrzustand des Fahrzeugs zu ermitteln. Aufgrund der Werte des Beschleunigungssensors kann beispielsweise bei Stillstand des Fahrzeugs die Messrate, mit der die Reifendruckmesswerte erfasst werden, und insbesondere die Zahl der stark strom-verbrauchenden HF-Übertragungen im Vergleich zum Fahrbetrieb deutlich reduziert werden, um die Leistungsaufnahme der Sensoranordnung zumindest geringfügig zu reduzieren.

Außerdem existieren im Stand der Technik Ansätze, die einen festen Schwellenwert für die aus den Reifendruckmesswerten erfassten Änderungen des Reifendrucks verwenden, um eine unbedingte Übermittlung des jeweils erfassten Reifendruckmesswertes von der Sendeeinheit der Reifendrucksensoranordnung zu einer externen dazu angeordneten Empfangseinheit zu veranlassen, wobei die Empfangseinheit üblicherweise mit der Fahrzeugelektronik verbunden ist, um beispielsweise über einen Bordcomputer die erfassten Reifendruckmesswerte dem Fahrer zur Verfügung zu stellen.

Die bisher im Stand der Technik eingesetzten Reifendrucksensoranordnungen zum Überwachen des Reifendrucks eines Fahrzeugreifens weisen jedoch eine Reihe von Nachteilen auf. So ist es mit den bisher bekannten batteriebetriebenen Reifendrucksensoranordnungen nicht möglich, über die gesamte Lebensdauer der Reifendrucksensoranordnung, die in der Größenanordnung von beispielsweise zehn Jahren liegt, kontinuierliche Messungen der Reifendruckmesswerte vorzunehmen. Übliche Reifendrucksensoranordnungen weisen dafür einen zu hohen Leistungsverbrauch auf, der die Lebensdauer der batteriebetriebenen Reifendrucksensoranordnung begrenzt, so dass nicht über die gesamte angestrebte Lebensdauer des Sensorsystems eine kontinuierliche Messung der physikalischen Zustandsgrößen wie Druck und Temperatur mit einer ausreichend hohen Messwiederholungsrate erfolgen kann. Eine ausreichende Messwiederholungsrate wird dabei durch den Zeitabstand festgelegt, während dem eine Änderung des Reifendrucks spätestens erkannt werden soll, so dass gilt, je kürzer der Zeitabstand zwischen der Erfassung der einzelnen Reifendruckmesswerte und deren Übermittlung an eine Auswerteelektronik ist, um so höher ist die Sicherheit, ausreichend früh eine gefährliche Änderung des Reifendrucks erkennen zu können.

Der Hauptleistungsverbrauch in einer derartigen Reifendrucksensoranordnung wird vor allem durch die zugeordnete Sendeeinheit bestimmt, die zur Übertragung der einzelnen Reifendruckmesswerte an eine Gegenstelle, d. h. an die der Fahrzeugelektronik zugeordneten Empfangseinheit dient, die die weitere Verarbeitung der übermittelten Reifendruck- bzw. Reifentemperaturwerte übernimmt. Bei den bisher gebräuchlichen Reifendrucksensoranordnungen wird also die Messhäufigkeit zur Erfassung der Reifendruckmesswerte und die Übertragungshäufigkeit zur Übermittlung der Reifendruckmesswerte abhängig von dem über einen zusätzlichen Beschleunigungssensor oder einen zusätzlichen Bewegungsschalter erfassten Fahrzustand des Fahrzeugs vorgenommen.

Bei den im Stand der Technik bekannten Reifendrucksensoranordnungen ist es also erforderlich, um frühestmöglich Druckänderungen des Reifendrucks zu erfassen, die auf Beschädigungen des Reifens hinweisen, abhängig vom erfassten Fahrzustand des Fahrzeugs eine im wesentlichen kontinuierliche Messung der Druck- und Temperaturwerte in dem Reifen vorzunehmen und diese an eine zentrale Verarbeitungseinheit, die der Fahrzeugelektronik zugeordnet ist, über eine Hochfrequenzfunkstrecke zu übertragen. Die relativ hohe Einschalthäufigkeit der Sendeeinheit bei dem Stand der Technik bekannten Reifendrucksensoranordnungen führt daher zu einer relativ hohen, mittleren Leistungsaufnahme der batteriebetriebenen Anordnung, was bekanntermaßen zur Folge hat, dass die angestrebte Lebensdauer von beispielsweise 10 Jahren solcher Reifendrucksensoranordnungen nicht erreicht werden kann.

Ausgehend von diesem Stand der Technik besteht die Aufgabe der vorliegenden Erfindung darin, ein verbessertes Konzept zum Überwachen eines Reifendrucks in einem Reifen eines Fahrzeugs zu schaffen, so dass über die gesamte angestrebte Lebensdauer einer Reifendrucksensoranordnung die physikalischen Zustandsgrößen wie Druck und Temperatur in einem Reifen zuverlässig überwacht werden können.

Diese Aufgabe wird durch ein Verfahren zum Überwachen eines Reifendrucks in einem Reifen eines Fahrzeugs gemäß Anspruch 1, durch ein Computer-Programm gemäß Anspruch 26 und durch eine Vorrichtung zum Überwachen eines Reifendrucks in einem Reifen eines Fahrzeugs gemäß Anspruch 27 gelöst.

Bei dem erfindungsgemäßen Verfahren zum Überwachen eines Reifensdrucks in einem Reifen eines Fahrzeugs werden zeitlich aufeinanderfolgende Reifendruckmesswerte durch eine Druckmesseinrichtung erfasst, wobei von einer Sendeeinheit zumindest ein Teil der Reifendruckmesswerte mit einer veränderlichen Häufigkeit zu einer Empfangseinheit übertragen werden. Die Häufigkeit der Übertragung wird dabei von den erfassten Reifendruckmesswerten abgeleitet oder aus einer Mehrzahl von Reifendruckmesswerten wird eine Reifendruckänderung des Reifens ermittelt, wobei der zeitliche Abstand zwischen aufeinanderfolgenden Erfassungszeitpunkten der Reifendruckmesswerte abhängig von der ermittelten Reifendruckänderung des Reifens eingestellt wird.

Die erfindungsgemäße Vorrichtung zum Überwachen eines Reifendrucks in einem Reifen eines Fahrzeugs umfasst eine Druckmesseinrichtung zum Erfassen zeitlich aufeinanderfolgender Reifendruckmesswerte, eine Sendeeinheit zum Übertragen zumindest eines Teils der Reifendruckmesswerte zu einer Empfangseinheit, und eine Steuereinheit zum Steuern der Häufigkeit der Übertragung der Reifendruckmesswerte durch die Sendeeinheit in Abhängigkeit von den erfassten Reifendruckmesswerten oder zum Ermitteln einer Reifendruckänderung des Reifens aus einer Mehrzahl von vorangehenden Reifendruckmesswerten, um den zeitliche Abstand zwischen aufeinanderfolgenden Erfassungszeitpunkten der Reifendruckmesswerte abhängig von der ermittelten Reifendruckänderung einzustellen.

Der vorliegenden Erfindung liegt dabei die Erkenntnis zugrunde, dass die Häufigkeit, mit der aktuell erfasste Reifendruckmesswerte und optional auch andere ausgewertete Reifendaten durch eine Sendeeinheit an eine externe Empfangseinheit übermittelt werden, veränderlich ist, wobei die Häufigkeit für die Übertragung aus den erfassten Reifendruckmesswerten selbst abgeleitet wird.

Dabei werden nicht alle erfassten Messwerte von der Sendeeinheit zu der Empfangseinheit übertragen, solange sich die erfassten Reifendruckmesswerte in einem Normalbereich befinden, wobei die Häufigkeit für die Übertragung der Reifendruckmesswerte erhöht wird, d. h. relativ kurze zeitliche Abstände für die Übertragung der Reifendruckmesswerte gewählt werden, wenn ein aus den erfassten Reifendruckmesswerten abgeleiteter, reifendruckabhängiger Parameter auf eine erhöhte Reifendruckänderung, bzw. erhöhte Reifendruckänderungen, hinweist. Erhöhte Reifendruckänderungen ergeben sich beispielsweise bei einem Gasverlust in dem Reifen oder bei einer anomalen Verformung bzw. Beschädigung des Reifens, wobei sichergestellt ist, dass in diesem Fall durch die erhöhte Häufigkeit die Übertragung der aktuellen Reifendruckmesswerte Änderungen des Reifendrucks schnellstmöglich erkannt werden und somit eine zuverlässige Überwachung der Funktionstüchtigkeit des Fahrzeugreifens ermöglicht wird.

Bei der vorliegenden Erfindung wird also der Zeitabstand für die Übertragung der Reifendruckmesswerte, d. h. die Häufigkeit der Übertragung von aktuellen Reifendruckmesswerten, an eine Empfangseinheit so aus den erfassten Reifendruckmesswerten abgeleitet, dass einerseits die Feststellung einer Druckänderung in dem Fahrzeugreifen schnellstmöglich erkannt und an die Empfangseinheit übermittelt kann, und andererseits aufgrund der stark verringerten Leistungsaufnahme der Reifendrucksensoranordnung während des Normalbetriebs des Fahrzeugreifens diese über die gesamte angestrebte Lebensdauer, z. B. mehrere Jahre, mit einer Batterie betrieben werden kann.

Bei der vorliegenden Erfindung wird also die Häufigkeit, mit der zeitlich aufeinanderfolgende Reifendruckmesswerte durch eine Sendeeinheit zu einer externen Empfangseinheit übertragen werden, aus den erfassten Reifendruckmesswerten selbst abgeleitet, indem ein reifendruckabhängiger Parameter aus den erfassten Reifendruckmesswerten erzeugt wird, der zur Beurteilung der Veränderung von bestimmten physikalischen Zustandsgrößen des Reifens, wie Reifendruck und Reifentemperatur, herangezogen wird. Der reifendruckabhängige Parameter kann dabei eine aus den Reifendruckmesswerten ermittelte physikalische Größe, wie der Reifendruckverlauf oder die zeitlichen Änderung des Reifendruckverlaufs (Gradient), sein oder der reifendruckabhängige Parameter kann eine statistische Größe sein, die aus den zeitlich aufeinanderfolgenden Reifendruckmesswerten bestimmt wird.

Durch die Auswertung des reifendruckabhängigen Parameters kann der Zeitabstand für die Übertragung der Reifendruckmesswerte von der Reifendrucksensoreinrichtung, d. h. von der Sendeeinheit zu der mit der Fahrzeugelektronik verbundenen Empfangseinheit vom jeweiligen Fahrzustand des Fahrzeugs und dem jeweiligen Zustand des Reifens eingestellt werden, wobei sich im Ruhezustand des Fahrzeugs und damit des Reifens eine maximale Zeitperiode zwischen der Übertragung der Reifendruckmesswerte ergibt, die sich jedoch ständig verkürzt, je größer die Druckänderung in dem Fahrzeug werden, die durch den reifendruckabhängigen Parameter wiedergegeben werden, und die aufgrund der Fahrt mit unterschiedlichen Geschwindigkeiten auf unterschiedlichen Fahrbahnen resultieren. Im Falle einer Beschädigung des Reifens, d. h. aufgrund eines Druckverlustes oder einer Verformung des Reifens, die auf eine Beschädigung des Reifens hindeuten, werden die aktuellen Reifendruckmessergebnisse mit einer minimalen Zeitperiode zwischen den einzelnen Übertragungen übermittelt.

Eine erfindungsgemäße Weiterbildung des Verfahrens zur Einstellung der Häufigkeit der Übertragung der erfassten Reifendruckwerte besteht nun darin, die zeitliche Änderung bzw. Änderungsrate des Druckverlaufs in einem Fahrzeugreifen zu erfassen, wobei die Änderungsrate des Druckverlaufs im folgenden als der Druckdynamikzustand in einem Fahrzeugreifen bezeichnet wird. Hohe Änderungsraten des Druckverlaufs führen somit zu einem erhöhten Druckdynamikzustand, während niedrige Änderungsraten des Druckverlaufs dementsprechend zu einem niedrigen Druckdynamikzustand in dem Fahrzeugreifen führen. Erfindungsgemäß werden die momentanen Druckdynamikzustände in unterschiedliche Klassen eingeteilt, wobei die unterschiedlichen Klassen bzw. Klassifizierungen der Druckdynamikzustände unterschiedliche Änderungen der Druckverläufe in einem Fahrzeugreifen, d. h. Änderungen der erfassten Reifendruckmesswerte mit einer geringeren oder mit einer höheren Dynamik, beschreiben. Aufgrund dieser Klassifizierung wird nun erfindungsgemäß der Abstand zwischen aufeinanderfolgenden Übertragungen der gemessenen Reifendruckmesswerte festgelegt, wobei im Fall einer geringen Druckänderungsdynamik in dem Fahrzeugreifen relativ lange zeitliche Abstände, z. B. 20 Minuten, und im Fall einer hohen Druckänderungsdynamik relativ kurze zeitliche Abstände, z. B. 20 Sekunden, zwischen aufeinanderfolgenden Übertragungen der gemessenen momentanen Reifendruckmesswerte eingestellt werden.

Das erfindungsgemäße Konzept nutzt dabei aus, dass sich im Fahrbetrieb eines Fahrzeugs dynamische Lastumverteilungen ergeben, die zu einer typischen Veränderung des Gasdrucks, d. h. zu auswertbaren Druckdynamikzuständen, in einem oder mehreren Reifen des Fahrzeugs führen. Beispielsweise werden in einer Kurve die äußeren Räder stärker belastet, so dass folglich der Druck in diesen Reifen ansteigt, während der Reifendruck in den Reifen der kurveninneren, entlasteten Räder sinkt. Entsprechende typische Reifendruckänderungen zwischen den Rädern der Hinterachse und der Vorderachse des Fahrzeugs treten beim Bremsen oder Beschleunigen des Fahrzeugs auf. Weitere Druckänderungen, die auf einen Fahrbetrieb des Fahrzeugs schließen lassen, treten beispielsweise beim Überfahren von Bodenunebenheiten auf.

Die im Fahrbetrieb des Fahrzeugs zu erwartenden Druckänderungen in den Fahrzeugreifen weisen im allgemeinen bedingt durch die Dauer typischer Fahrsituationen eine spezifische Dynamik von wenigen Sekunden auf. Derartige Reifendruckänderungen in den Fahrzeugrädern sind im Stillstand bzw. Parkzustand des Fahrzeugs nicht zu erwarten, da der Reifendruck in einem intakten Reifen in diesem Fall nur aufgrund von Temperaturänderungen schwankt und somit eine weit geringere Dynamik in einem Bereich von Minuten oder Stunden bezüglich der Reifendruckänderungen auftritt.

Erfindungsgemäß werden nun die Reifendruckänderungen oder auch andere erfasste Reifenzustandsparameter ausgewertet und sogenannte Druckdynamikzustände ermittelt. Die ermittelten Druckdynamikzustände können nun in unterschiedliche Klassen von Druckdynamikzuständen eingeteilt werden, die unterschiedliche Fahrsituationen des Fahrzeugs wiedergeben, so dass ohne einen Beschleunigungssensor oder einen andersartig ausgeführten Rolldetektor eine Aussage bzw. Entscheidung getroffen werden kann, in welcher Fahrsituation sich das Fahrzeug entsprechend eines ermittelten niedrigen oder hohen Druckdynamikzustands gerade befindet.

Abhängig von dem ermittelten Druckdynamikzustand bzw. von der Einstufung in eine bestimmte Klasse für die Druckdynamikzustände kann nun wieder erfindungsgemäß der zeitliche Abstand zwischen aufeinanderfolgenden Übertragungen der gemessenen Reifendruckmesswerte festgelegt werden.

Im Gegensatz zu im Stand der Technik bekanten Beschleunigungssensoren, bei denen die Zentrifugalkraft an dem Fahrzeugrad gemessen wird, die direkt von der Raddrehzahl und damit unmittelbar von der Geschwindigkeit des Fahrzeugs abhängt, sollte bezüglich der vorliegenden Erfindung beachtet werden, dass die schnellen, dynamischen Reifendruckänderungen, die erfindungsgemäß ausgewertet werden, zwar im allgemeinen auch beim Fahrbetrieb des Fahrzeugs auftreten, aber nicht direkt mit der Drehzahl des Rades sondern vielmehr mit den Lastverhältnissen beim Kurvenfahren und beim Beschleunigen bzw. Bremsen und mit den Fahrbahnverhältnissen verknüpft sind. Auf einer ideal glatten und geraden Fahrbahn mit konstanter Geschwindigkeit und Richtung würde sich der Druck in einem idealen Reifen ohne Profil und Unwucht nicht ändern. Die Weiterentwicklung der erfindungsgemäßen Verfahrens zur Einstellung der Häufigkeit der Übertragung der erfassten Reifendruckwerte besteht nun darin, das eine sog. Clusterung oder Klassifizierung der erfassten Reifendruckmesswerte in Druckdynamikzustände bzw. -kategorien vorgenommen wird.

Ein anschaulicher Vorteil liegt darin, dass ein Druckverlust bei einem geparkten Auto nicht zu einer fälschlichen Ermittlung eines Fahrzustands des Fahrzeugs wohl aber zu einer erhöhten Druckdynamikzustand des Reifens führt. Das gleiche gilt auch für das Aufpumpen des Reifens an der Tankstelle oder die Erhöhung der Gewichtsbelastung beim Einsteigen oder beim Beladen des Autos.

Zusätzlich oder alternativ zu der geeigneten Einstellung des zeitlichen Abstands zwischen aufeinanderfolgenden Übertragungen der aktuellen Reifendruckmessergebnisse eines Reifendrucksensors oder anderer Reifenzustandsparameter ist es mit der vorliegenden Erfindung ferner möglich, entsprechend des jeweils ermittelten Druckdynamikzustands oder der jeweiligen Klassifizierung der Druckdynamikzustände eine momentane Fahrsituation des Fahrzeugs zu ermitteln, wobei nun abhängig von der ermittelten momentanen Fahrsituation des Fahrzeugs ferner der zeitliche Abstand $\Delta T_{mess}$ zwischen aufeinanderfolgenden Erfassungszeitpunkten der Reifendruckmesswerte, die durch die Reifendruckmesseinrichtung erfasst werden, entsprechend eingestellt werden kann. Dabei wird vorzugsweise bei einer Klassifizierung für niedrigere Druckdynamikzustände in dem Reifen des Fahrzeugs der zeitliche Abstand zwischen aufeinanderfolgenden Erfassungszeitpunkten länger gewählt als der zeitliche Abstand zwischen aufeinanderfolgenden Erfassungszeitpunkten bei einer Klassifizierung für höhere Druckdynamikzustände in dem Reifen des Fahrzeugs. Dies liefert ein weiteres Energieeinsparpotential bei der Überwachung eines Fahrzeugreifens.

Durch das erfindungsgemäße Konzept zum Überwachen eines Reifendruck in einem Reifen eines Fahrzeuges ergeben sich eine Reihe von Vorteilen.

So können mit batteriebetriebenen Reifendrucksensoranordnungen die erforderlichen Messungen des Reifendrucks über die gesamte angestrebte Lebensdauer, die in der Größenordnung von zehn Jahren liegen kann, einer Reifendrucksensoranordnung gewährleistet werden, da sich die Reifendrucksensoranordnung in einem Energiesparbetrieb (power saving operation) befindet, so dass die Leistungsaufnahme der Anordnung äußerst gering ist, solange keine kritische Veränderung des Reifendrucks auftritt. Wenn jedoch eine kritische Veränderung des Reifendrucks auftritt, die auf einen Gasverlust bzw. auf eine Beschädigung des Reifens hinweist, wird ein möglichst kurzer Zeitabstand zwischen den übermittelten aktuellen Reifendruckmesswerten verwendet, um äußerst zuverlässig und sehr schnell Änderungen des Reifendrucks erkennen zu können und diese auszuwerten, wenn dies erforderlich ist.

Da bei der vorliegenden Erfindung ferner ein aus den erfassten Reifendruckmesswerten abgeleiteter, reifendruckabhängiger Parameter verwendet wird, aus dem auf die physikalischen Zustandsparameter, d. h. auf den Druck im Reifen abhängig von dem Fahrzustand des Fahrzeugs, geschlossen werden kann, ist bei der vorliegenden Erfindung kein zusätzlicher Beschleunigungssensor oder Bewegungsschalter zur Erfassung des Fahrzustands des Fahrzeugs erforderlich, dessen Auswertung einerseits einen zusätzlichen schaltungstechnischen Aufwand bedeutet, und damit andererseits den Stromverbrauch, d. h. die Leistungsaufnahme, der Reifendrucksensoranordnung erhöhen würde.

Bei der vorliegenden Erfindung wird ferner ermöglicht, dass die aktuellen Reifendruckmesswerte und optional auch andere erfasste und ausgewertete Daten regelmäßig mit einer vorgegebenen Mindesthäufigkeit, z. B. stündlich, an eine Zentraleinheit im Fahrzeug, z. B. an den Bordcomputer, übertragen werden, um der Zentraleinheit die Überwachung der Funktionstüchtigkeit der Reifendrucksensoranordnung zu ermöglichen. Andererseits ermöglicht die vorliegende Erfindung, dass Druckänderungen äußerst frühzeitig an die Zentraleinheit übermittelt werden, so dass Beschädigungen des Reifens frühestmöglich erkannt werden können.

Ferner ermöglicht die vorliegende Erfindung, dass zusätzlich zu dem aktuellen Reifendruckmesswert weitere Informationen zu der Zentraleinheit übermittelt werden können, die dann sinnvoll ausgewertet werden können, wenn der Reifendruck in einem konstanten Zeitabstand erfasst wird. Diese zusätzlichen Informationen sind beispielsweise tiefpassgefilterte Druckwerte oder gleitende Mittelwerte der erfassten Reifendruckmesswerte, die Abweichung der Messung des Reifendruckmesswertes vom Vorgängerwert oder einem tiefpassgefilterten oder gemittelten Wert, oder beispielsweise statistische Werte auf der Grundlage der erfassten Reifendruckmesswerte, wie z. B. Maßzahlen für Gradienten oder Varianzen der Messwerte über einen bestimmten Beobachtungszeitraum.

Diese zusätzlichen Daten können äußerst nützlich dabei eingesetzt werden, beispielsweise eine exakte Beurteilung des Reifenzustands über eine längere Zeitperiode vorzunehmen.

Bezüglich der erfindungsgemäßen Vorgehensweise zur Klassifizierung der ermittelten Druckdynamikzustände in dem Fahrzeugreifen und damit der Ermittlung der momentanen Fahrsituation des Fahrzeugs aus den erfassten Reifendruckmesswerten ergeben sich eine Reihe von weiteren Vorteilen bezüglich der Überwachung eines Reifendrucks in einem Reifen eines Kraftfahrzeugs.

So wird es ermöglicht, dass die Leistungsaufnahme einer batteriebetriebenen Reifendrucküberwachungseinrichtung weiter gesenkt werden kann, um die Messungen des Reifendrucks oder anderer Reifenspezifischer Parameter über die gesamte Lebensdauer eines Reifenüberwachungssystems durchführen zu können, wobei das Reifenüberwachungssystem beispielsweise in der Reifenfelge angeordnet ist und eine Lebensdauer in der Größenordnung von mehreren Jahren aufweisen soll.

Dies wird nun erfindungsgemäß erreicht, indem aus einer Mehrzahl von vorangehenden Reifendruckmesswerten eine Klassifizierung des Druckdynamikzustände ermittelt wird, woraufhin der zeitliche Abstand zwischen aufeinanderfolgenden Erfassungszeitpunkten und/oder Übertragungszeitpunkten der Reifendruckmesswerte abhängig von der ermittelten momentanen Fahrsituation eingestellt wird. Dadurch wird erreicht, dass bei Fahrsituationen mit (relativ) geringen Druckdynamikzuständen in den Fahrzeugreifen auch eine geringere Anzahl von Messungen der Reifendruckwerte vorgenommen werden kann, so dass in dieser Fahrsituation der Energieverbrauch der erfindungsgemäßen Reifenüberwachungsanordnung weiter verringert werden kann.

Ferner wird es ermöglicht, durch die Frequenz der Reifendruckmessungen, d. h. durch die geeignete Einstellung des zeitlichen Abstands zwischen aufeinanderfolgenden Erfassungszeitpunkten, die Zeitdauer beeinflussen zu können, die von dem Reifendrucküberwachungssystem benötigt wird, bis ein Zustandswechsel der Fahrsituation des Fahrzeugs, beispielsweise von einem Ruhezustand in einen Fahrzustand, erkannt wird.

Die vorliegende Erfindung ermöglicht also, dass durch die ermittelten Druckdynamikzustände in einem Fahrzeugreifen der Übertragungszeitpunkt eines gemessenen Reifendruckmesswerts festgelegt wird, wobei ferner durch eine geeignete Klassifizierung der ermittelten Druckdynamikzustände erfindungsgemäß der Abstand zwischen aufeinanderfolgenden Übertragungszeitpunkten der gemessenen Reifendruckmesswerte und/oder der Abstand zwischen aufeinanderfolgenden Erfassungszeitpunkten der Reifendruckmesswerte festgelegt werden kann.

Bevorzugte Ausführungsbeispiele der vorliegenden Erfindung werden nachfolgend unter Bezugnahme auf die beiliegenden Zeichnungen näher erläutert. Es zeigen:

Fig. 1       ein Flussdiagramm für ein Verfahren zum Überwachen eines Reifendrucks in einem Reifen eines Fahrzeugs gemäß der vorliegenden Erfindung;

Fig. 2a-c       in Diagrammform die Vorgehensweise zur Ermittlung der Häufigkeit der Übertragung der Reifendruckmesswerte von einer Sendeeinheit an eine Empfangseinheit in Abhängigkeit des Reifendrucks und des Betrags der Messwertänderung gemäß der vorliegenden Erfindung;

Fig. 3       in Diagrammform die Vorgehensweise zur Ermittlung der Häufigkeit der Übertragung der Reifendruckmesswerte in Abhängigkeit einer aus dem Druckverlauf erhaltenen statistischen Größe (Standardabweichung) gemäß der vorliegenden Erfindung;

Fig. 4a-b       eine prinzipielle Darstellung der Änderung des Zeitabstands für die Übertragung der Reifendruckmesswerte in Abhängigkeit des Fahrzustands des Fahrzeugs und des Reifenzustands;

Fig. 5a-c       in Diagrammform die Vorgehensweise zur Klassifizierung der Druckdynamikzustände in einem Reifen eines Kraftfahrzeugs, wobei Fig. 5a einen beispielhaft ermittelten Verlauf von Druckmesswerten im Reifen und deren Kurzzeitmittelwerte, Fig. 5b Druckschwankungen, und Fig. 5c Abweichungsquadrate der Druckschwankungen, gefilterte Abweichungsquadrate und die ermittelte Fahrsituation darstellt;

Fig. 6       ein Flussdiagramm mit den verschiedenen Verfahrensschritten zum Ermitteln und Klassifizieren von Druckdynamikzuständen in einem Reifen eines Fahrzeugs gemäß dem erfindungsgemäßen Verfahren; und

Fig. 7       eine Prinzipdarstellung in Blockdiagrammform einer Vorrichtung zum Überwachen eines Reifendrucks in einem Fahrzeugreifen gemäß der vorliegenden Erfindung.

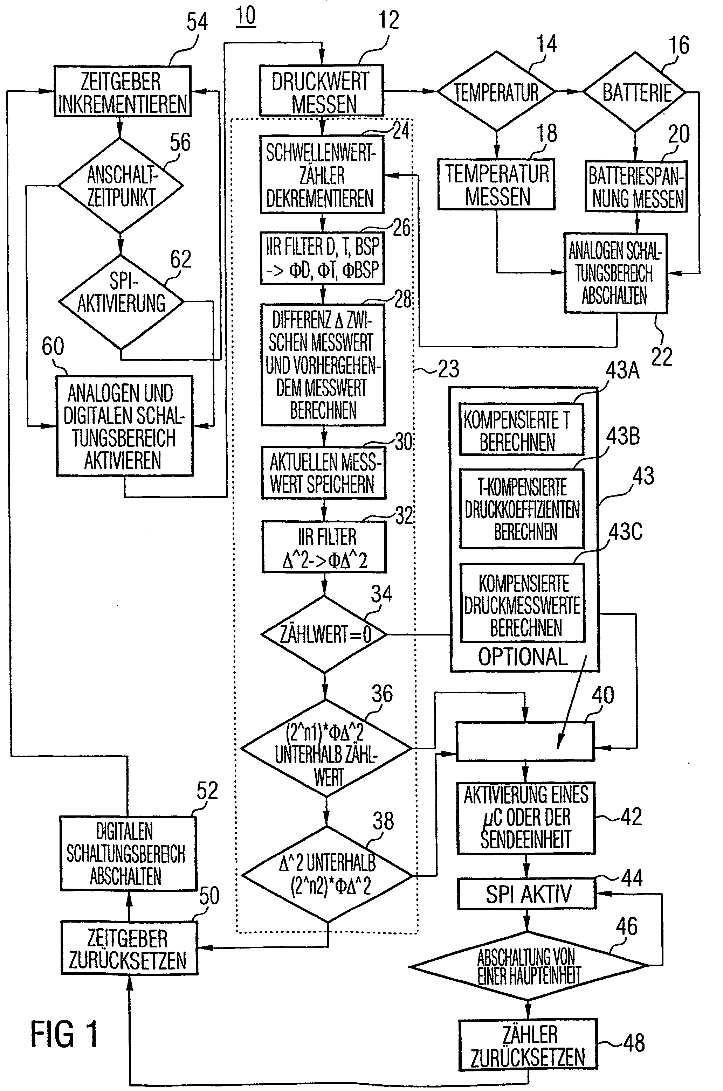

Bezug nehmen auf Fig. 1 wird nun anhand eines Flussdiagramms ein bevorzugtes Ausführungsbeispiel der vorliegenden Erfindung zur Überwachung eines Reifendrucks in einem Fahrzeugreifen detailliert erörtert.

Wie in Kästchen 12 des Flussdiagramms 10 von Fig. 1 gezeigt ist, beginnt das Verfahren zum Überwachen eines Reifendrucks in einem Fahrzeugreifen damit, zeitlich aufeinanderfolgende Reifendruckmesswerte zu erfassen. Ferner wird, wie in Kästchen 14 und 16 des Flussdiagramms 10 gezeigt ist, zusätzlich optional die Temperatur des Reifens bzw. die Gastemperatur in dem Reifen und der Batteriezustand, d. h. die Batteriespannung, erfasst. Die Werte werden dann zusammen mit dem aktuellen Reifendruckmesswert als Temperaturmesswert und Batteriespannungsmesswert bereitgestellt, wie dies in den Kästchen 18 und 20 des Flussdiagramms 10 dargestellt ist. Nachdem die physikalischen Zustandsgrößen des Fahrzeugreifens erfasst und die Batteriespannung ermittelt wurde, wird die Leistungsversorgung für die Messeinrichtungen abgeschaltet, wie dies in dem Kästchen 22 (power down analog) dargestellt ist.

Die ermittelten physikalischen Zustandsgrößen werden nun einer Steuer- und Auswertungseinheit zur Weiterverarbeitung zur Verfügung gestellt, wie dies durch das Kästchen 23, das die Kästchen 24-38 des Flussdiagramms 10 umfasst, dargestellt ist.

Wie in Kästchen 24 von Fig. 1 dargestellt, wird bei dem nächsten Verfahrensschritt der Schwellwertzähler dekrementiert, wobei dieser Schritt mit jedem Durchlauf des Verfahrens durchgeführt wird. Die bevorzugte Ausführungsform dieses Schwellwertzählers ist beispielsweise ein IIR-Digitalfilter (IIR = infinite impulse response), in dem das Dekrement als Bruchteil (0 < b < 1) des aktuellen Werts berechnet wird. Dabei stellen die Koeffizienten a, b die Filterkoeffizienten dar.

Bei einer ersten Ausführungsform ist das IIR-Digitalfilter ein Tiefpassfilter 1. Ordnung. Daraus ergibt sich die folgende Übertragungsfunktion des Filters:

$$H_{IIR}(z) = \frac{a}{1-b \cdot z^{-1}}$$

Bei einer zweiten möglichen Ausführungsform ist das IIR-Digitalfilter ein Tiefpassfilter 2. Ordnung. Daraus ergibt sich die folgende Übertragungsfunktion des Filters:

$$H_{IIR}(z) = \left(\frac{a}{1-b \cdot z^{-1}}\right)^2$$

Die optionale Verwendung eines Tiefpassfilters 2. Ordnung bewirkt eine noch größere Differenzierung der durch das Verfahren berechneten Zeitabstände der Einschaltvorgänge (wake up). Diese Ausführungsform benötigt dafür aber eine aufwändigere Hardware-Anordnung.

In Kästchen 26 von Fig. 1 ist nun als nächster Schritt dargestellt, dass ein Filter dazu verwendet wird, einen Mittelwert über die drei Messgrößen Druck, Temperatur und Batteriespannung zu berechnen. Diese Mittelung wird zur nachfolgenden Berechnung der Abweichung des aktuellen Messwerts benötigt. Darüber hinaus kann durch diese Filterung eine Erhöhung der Messgenauigkeit erreicht werden, da das Tiefpassfilter den in den Einzelwerten enthaltenen Rauschanteil dämpft.

Die Ausführungsform des bei diesem Schritt verwendeten Filters ist vorzugsweise mit dem IIR-Digitalfilter aus Kästchen 24 identisch, da in diesem Fall die gleiche Hardware-Anordnung verwendet werden kann. Die Koeffizienten a und b des Filters müssen allerdings unterschiedlich gewählt werden und sind in diesem Fall beispielsweise programmierbar über eine serielle Schnittstelle auszulegen.

Bei dem in Kästchen 28 dargestellten Verfahrensschritt wird nun die Differenz zwischen dem aktuellen Abtastwert und dem gefilterten Wert, der bei dem Verfahrensschritt von Kästchen 26 erhalten wird, berechnet.

Bei dem in Kästchen 30 dargestellten Verfahrensschritt werden der aktuelle Messwert und der neuberechnete Mittelwert gespeichert. Die gespeicherten Werte können aus diesem Speicher beispielsweise über eine serielle Schnittstelle ausgelesen werden.

Bei dem in Kästchen 32 dargestellten Verfahrensschritt wird die bei dem in Kästchen 28 dargestellten Verfahrensschritt berechnete Differenz quadriert und anschließend tiefpassgefiltert. Das Resultat dieser Filterung dient als Näherungswert für die Standardabweichung. Als bevorzugte Ausführungsform wird wiederum vorzugsweise aus Gründen der Hardwaremehrfachnutzung das gleiche Filter wie bei den in Kästchen 24 und Kästchen 26 dargestellten Verfahrensschritten verwendet, wobei wiederum die Filterkoeffizienten a und b über eine serielle Schnittstelle programmierbar ausgelegt sind.

Bei dem in Kästchen 34 dargestellten Verfahrensschritt wird nun eine Sicherheitsabfrage ausgeführt, um zu vermeiden, dass der Zähler überläuft. Falls dies festgestellt wird, wird ein Einschaltvorgang (wake up) ausgelöst und der Zähler wird auf seinen Startwert zurückgesetzt.

Bei dem in Kästchen 36 dargestellten Verfahrensschritt wird nun geprüft, ob der Zähler (siehe Kästchen 24) den Näherungswert der Standardabweichung (siehe Kästchen 32) unterschreitet. Gegebenenfalls wird ein Einschaltvorgang (wake up) ausgelöst und der Zähler wird auf seinen Startwert zurückgesetzt.

Bei dem in Kästchen 38 dargestellten Verfahrensschritt wird nun geprüft, ob der aktuelle Messwert größer ist als ein Vielfaches der genäherten Standardabweichung. Gegebenenfalls wird ein Einschaltvorgang (wake up) ausgelöst und der Zähler wird auf seinen Startwert zurückgesetzt. Diese zweite Abfrage gewährleistet eine unmittelbare Reaktion auf große Änderungen des Messwerts. Die gewählte Vielfachheit der genäherten Standardabweichung ist wiederum über eine serielle Schnittstelle programmierbar.

Wie in Kästchen 40 des Flussdiagramms 10 dargestellt ist, wird nun, wenn der Wert des reifendruckänderungsabhängigen Parameters eine vorgegebene Schwelle erreicht, der diesen Zeitpunkt entsprechende aktuelle Reifendruckmesswert bereitgestellt.

Wie in Kästchen 43 des Flussdiagramms 10 dargestellt ist, kann optional eine Temperaturkompensation des erfassten Reifendruckmesswertes durchgeführt werden. Wie in Kästchen 43a dargestellt ist, kann beispielsweise eine sog. kompensierte Temperatur berechnet werden. Die kompensierte Temperatur wird vorzugsweise berechnet, da der verwendete Temperatursensor im allgemeinen Fertigungsschwankungen unterworfen ist, die zu Exemplarstreuungen führen. Dazu wird ein additiver Koeffizient zur Offsetkorrektur zu dem aktuellen Messwert hinzuaddiert und anschließend ein multiplikativer Koeffizient zur Empfindlichkeitskorrektur verwendet. Nach einer Korrektur mit diesen beiden Koeffizienten liefert jeder Temperatursensor im Rahmen der vorgesehenen Abgleichgenauigkeit den gleichen Messwert.

Wie in Kästchen 43b dargestellt ist, können beispielsweise auch sog. temperaturkompensierte Druckkoeffizienten berechnet werden. Diese Berechnung wird durchgeführt, da auch der Drucksensor, wie der Temperatursensor (siehe Kästchen 43a), im allgemeinen Fertigungsschwankungen unterliegt, die zu einer Exemplarstreuung führen. Bei dem Drucksensor kommt eine deutliche Abhängigkeit der Parameter von der Temperatur hinzu. Um wiederum eine Reproduzierbarkeit der Druckmessung zu erreichen, wird der aktuelle Messwert gemäß eines quadratischen Polynoms korrigiert. Um darüber hinaus die Temperaturabhängigkeit zu beseitigen, werden die drei Koeffizienten, Offset, lineare Empfindlichkeitskorrektur, quadratische Empfindlichkeitskorrektur, jeweils mit einem Temperaturkorrekturfaktor abhängig von der zuvor berechneten Temperatur korrigiert, bevor das Polynom berechnet wird.

Ferner können, wie in Kästchen 43c dargestellt ist, kompensierte, wie z. B. temperaturkompensierte, Reifendruckmesswerte berechnet werden.

Nachdem also der reifendruckänderungsabhängige Parameter einen vorgegebenen Schwellenwert erreicht hat, wird der entsprechende aktuelle Reifendruckmesswert von einer Sendeeinrichtung der Reifendrucksensoranordnung an eine Empfangseinheit, die beispielsweise der Zentraleinheit der Fahrzeugelektronik zugeordnet ist, übermittelt, wie dies in Kästchen 42 des Flussdiagramms 10 durch die Aktivierung eines μProzessors (μC) oder der Sendeeinheit (transmitter) dargestellt ist.

Wie in Kästchen 44 und 46 des Flussdiagramms 10 dargestellt ist, wird eine serielle Peripherieschnittstelle aktiviert, bzw. ist aktiv, die nach der Übertragung des Reifendruckmesswertes von einer Haupteinheit (power down from master) abgeschaltet wird. Als nächstes wird der Zähler auf seinen Startwert, z. B. auf Null "0", zurückgesetzt, wie dies in Kästchen 48 des Flussdiagramms 10 dargestellt ist. Daraufhin wird der Zeitgeber zurückgesetzt, Kästchen 50, woraufhin der digitale Schaltungsbereich der Reifendrucksensoranordnung abgeschaltet wird, wie dies in Kästchen 52 des Flussdiagramms 10 dargestellt ist.

Wie in Kästchen 54 des Flussdiagramms 10 dargestellt ist, wird nun der Zeitgeber inkrementiert, und der Anschaltzeitpunkt (wake up time) für die analoge und digitale Schaltung vorgegeben, siehe Kästchen 56 und 60, wobei wiederum die serielle Peripherieschnittstelle aktiviert wird, siehe Kästchen 62.

Mit der Aktivierung der analogen und digitalen Schaltungskomponenten der Reifendrucksensoranordnung beginnt nun wiederum die Erfassung eines darauffolgenden Reifendruckmesswertes, wie dies in Kästchen 12 des Flussdiagramms 10 dargestellt ist.

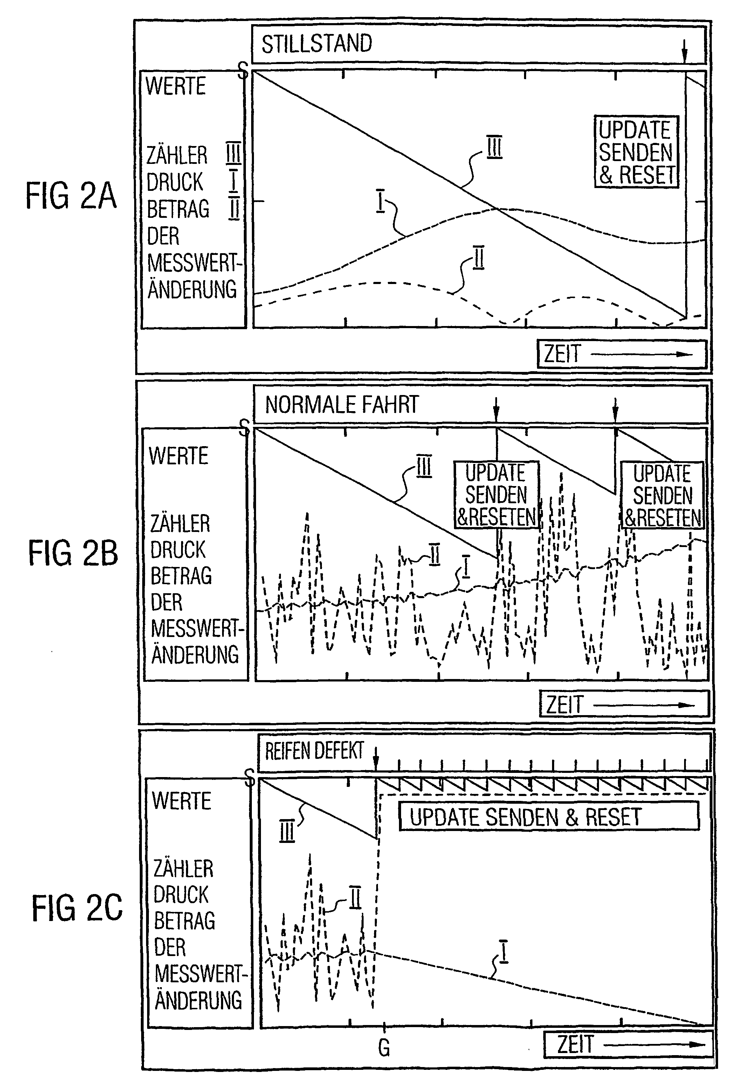

Im folgenden wird nun anhand der in den Figuren 2a-c dargestellten Diagramme erläutert, wie das erfindungsgemäße Verfahren zum Überwachen eines Reifendrucks in einem Fahrzeugreifen durchgeführt wird.

In Fig. 2a ist als Verlauf I der Reifendruck, d. h. der Verlauf der erfassten Reifendruckmesswerte, in dem Fahrzeugreifen über der Zeit dargestellt. Der Verlauf II zeigt nun die Änderung des Verlaufs des Reifendrucks in dem Fahrzeugreifen, d. h. den Gradienten. Der Verlauf III zeigt den Zählerstand eines Zählers, der beginnend bei einem Startwert "S" jeweils um einen festen Wert dekrementiert wird, so dass die Schwelle für das Auslösen eine Übertragung eines Reifendruckmesswertes abhängig von dem Zählerstand sinkt.

Wie in Figur 2a dargestellt ist, wird dann die Übertragung eines erfassten aktuellen Reifendruckmesswerts ausgelöst, wenn der Zählerstand, der den Schwellenwert für das Auslösen einer Übertragung darstellt, den Verlauf für den Betrag der Messwertänderung, d. h. den Verlauf des reifendruckänderungsabhängigen Parameters, erreicht.

Es sollte beachtet werden, dass in den Figuren 2a-c der Betrag der Messwertänderung des Reifendruckes lediglich beispielhaft als der reifendruckänderungsabhängige Parameter gewählt wurde, wobei ein beliebiger reifendruckänderungsabhängiger Parameter verwendet werden kann, der aus dem erfassten Reifendruckmesswerten bestimmt wird, um mit dem Zählerstand verglichen zu werden, um die Übertragung des Reifendruckmesswertes auslösen, wenn der Zählerstand diesen reifendruckänderungsabhängigen Parameter erreicht oder unterschreitet.

Das in Figur 2b dargestellte Diagramm zeigt nun als Verlauf I den Verlauf der erfassten Reifendruckmesswerte während der Fahrt eines Kraftfahrzeugs, wobei sich der temperaturbedingten Änderung des Reifendrucks hier ferner eine Änderung des Reifendrucks durch die Verformung des Reifens bei Kurvenfahrten oder durch das Überfahren von Unebenheiten überlagert. Der Verlauf II stellt wiederum den Betrag der Messwertänderung der Reifendruckmesswerte dar. Es ist zu erkennen, dass dieser Verlauf II relativ große Schwankungen zeigt.

Der Verlauf III stellt wieder den Zählerstand des Zählers dar, der beginnend bei einem Startwert S dekrementiert wird. Der Zählerstand wird wieder mit dem von den erfassten Reifendruckmesswerten abgeleiteten, reifendruckänderungsabhängigen Parameter verglichen, wobei die Übertragung des Reifendruckmesswertes wieder ausgelöst wird, wenn der Zählerstand den reifendruckänderungsabhängigen Parameter erreicht oder unterschreitet.

Da sich, wie in Figur 2a dargestellt, der Reifendruck eines beispielsweise parkenden Fahrzeugs bedingt durch die Änderung der Umgebungstemperatur nur langsam verändert, ergibt sich eine sehr geringe Übertragungsrate des erfassten Reifendruckmesswertes, d. h. die Reifendruckmesswerte werden mit einer sehr geringen Häufigkeit von der Sendeeinheit der Reifendrucksensoranordnung zu einer Empfangseinheit übertragen.

Da der Verlauf II des Betrags der Messwertänderungen sehr starke Schwankungen aufweist, wird in diesem Fall erheblich früher als in dem in Figur 2a dargestellten Diagramm eine Übertragung des Reifendruckmesswertes ausgelöst, da der Zählerstand erheblich früher den reifendruckänderungsabhängigen Parameter erreicht bzw. unterschreitet. Aufgrund der relativ großen Schwankungen des Verlaufs II des Betrags der Messwertänderung reagiert nun das System mit einer erhöhten Übertragungsrate.

In Figur 2c ist nun in Form eines Diagramms dargestellt, wie sich der Verlauf I des Reifendrucks, der Verlauf II des Betrags der Messwertänderung und der Zählerstand III verändert, wenn ein kontinuierlicher Druckverlust in dem Fahrzeugreifen, beispielsweise aufgrund einer Beschädigung des Reifens, auftritt.

Aufgrund des kontinuierlichen Druckverlustes in dem Fahrzeugreifen fällt der Reifendruck ab dem Zeitpunkt C kontinuierlich ab. Ab diesem Zeitpunkt steigt der Betrag Messwertänderung II extrem schnell auf einen Maximalwert an, wodurch nach dem Auftreten des Druckverlustes in dem Reifen beispielsweise jedes Mal, wenn ein neuer Reifendruckmesswert erfasst wird, eine Übertragung des erfassten aktuellen Reifendruckmesswerts ausgelöst wird.

Das in den Figuren 2a-c anhand von Diagrammen dargestellte erfindungsgemäße Verfahren zum Überwachen eines Reifendrucks in einem Fahrzeugreifen lässt sich also folgendermaßen zusammenfassen.

Eine Sensoreinrichtung wird beispielsweise durch einen EinschaltZeitgeber (wake up timer) in regelmäßigen Abständen, z. B. eine Sekunde, aktiviert, um eine Erfassung des aktuellen Reifendruckmesswertes vorzunehmen. Mit jeder erfolgten Messung wird ein Zähler beginnend bei dem Startwert S dekrementiert. Aus dem zeitlich aufeinander folgenden Reifendruckmesswerten (Verlauf I) wird ein reifendruckänderungsabhängiger Parameter (Verlauf II) abgeleitet, wie z. B. der Gradient (die Änderung) des Druckverlaufs, wobei dieser Parameter mit dem Zählerstand verglichen wird. Erreicht nun der Zählerstand, der kontinuierlich dekrementiert, den reifendruckänderungsabhängigen Parameter wird eine Übertragung des aktuellen Reifendruckmesswerts vorgenommen, d. h. eine Sendeeinheit wird aktiviert, um den aktuellen Reifendruckmesswert an eine Empfangseinheit zu übertragen. Daraufhin wird der Zähler wieder auf den Startwert S zurückgesetzt und der Reifendrucküberwachungszyklus beginnt von Neuem.

Entsprechend einer weiteren möglichen Ausführungsform des erfindungsgemäßen Verfahrens zur Überwachung eines Reifendrucks in einem Fahrzeugreifen ist es natürlich auch denkbar, dass der abgeleitete reifendruckänderungsabhängige Parameter dem Zählerstand hinzuaddiert wird, wobei der Zähler nach jedem Auslösen eine Übertragung auf einen Startwert S , z. B. auf Null "0", gesetzt wird und nach jeder Erfassung eines Reifendruckmesswertes inkrementiert (erhöht) wird. Die Übertragung eines aktuellen Reifendruckmesswertes wird dann bei dieser Ausführungsform ausgelöst, wenn die Summe aus dem reifendruckänderungsabhängige Parameter und dem Zählerstand des Zählers eine vorgegebene feste Schwelle überschreitet.

Eine weitere Möglichkeit, den Zählerstand des Zählers mit dem reifendruckänderungsabhängige Parameter zu kombinieren, besteht ferner darin, dass beide Werte, d. h. der Zählerstand und der Parameter, multipliziert werden. Der Vorteil einer Multiplikation des Zählerstands mit dem reifendruckänderungsabhängigen Parameter besteht darin, dass dadurch eine starke Dynamik des sich aus der Multiplikation ergebenden Verlaufs erzeugt wird, so dass eine höhere Auflösung bei der Überwachung des Reifendrucks in einem Fahrzeugreifen erreichbar ist.

Ferner sollte beachtet werden, dass der aus den erfassten Reifendruckmesswerten abgeleitete reifendruckänderungsabhängige Parameter, der mit dem jeweiligen Zählerstand verglichen wird, auch aus statistischen Werten bestehen kann, mittels derer die Häufigkeit der Übertragung des aktuellen Reifendruckmesswertes zu einer Empfangseinheit abgeleitet werden kann.

Der reifendruckänderungsabhängige Parameter kann dabei beispielsweise die Differenz zweier aufeinander folgender erfasster Reifendruckmesswerte sein. Der reifendruckänderungsabhängige Parameter kann ferner das Quadrat der Differenz zweier aufeinander folgender Reifendruckmesswerte sein. Als reifendruckänderungsabhängige Parameter kann ferner die Differenz des erfassten Reifendruckmesswerts zu einem tiefpassgefilterten oder gemittelten Wert der zeitlich aufeinander folgenden erfassten Reifendruckmesswerte verwendet werden. Als der reifendruckänderungsabhängige Parameter kann auch das Quadrat der Differenz eines erfassten Reifendruckmesswertes zu einem tiefpassgefilterten oder gemittelten Werts einer Mehrzahl von zeitlich aufeinander folgenden, erfassten Reifendruckmesswerten verwendet werden.

Als reifendruckänderungsabhängige Parameter kann ferner die Standardabweichung einer Mehrzahl von zurückliegenden zeitlich aufeinander folgenden erfassten Reifendruckmesswerten verwendet werden. Als der reifendruckänderungsabhängige Parameter kann darüber hinaus ein gemittelter oder gefilterter Wert der im vorhergehenden aufgeführten reifendruckänderungsabhängigen Parameter verwendet werden.

Ferner sollte beachtet werden, dass bei dem erfindungsgemäßen Verfahren zum Überwachen eines Reifendrucks in einem Fahrzeugreifen ferner anstelle des Überschreitens eines Zählwerts auch das Überschreiten einer statistischen Messgröße, wie z. B. eines Vielfachen der Standardabweichung der letzten zurückliegenden erfassten Reifendruckmesswerte, oder einer anderen Messgröße, wie z. B. der Varianz der zurückliegenden Reifendruckmesswerte, herangezogen werden kann, wobei auch diese Werte nochmals gemittelt oder gefiltert werden können.

Ferner ist es möglich, diese Werte mit einem Zähler zu verrechnen. Die Verrechnung der statistischen Messgröße mit einem Zählerstand kann beispielsweise so aussehen, dass die statistische Größe als Zählerdekrement gewählt wird. Diese Variante ermöglicht eine stärkere Differenzierung des Übertragungsabstände, weil nicht nur der Schnittpunkt zwischen Zähler und Schwellwert höher liegt, sondern der Zählerstand zusätzlich auch noch schneller dekrementiert wird.

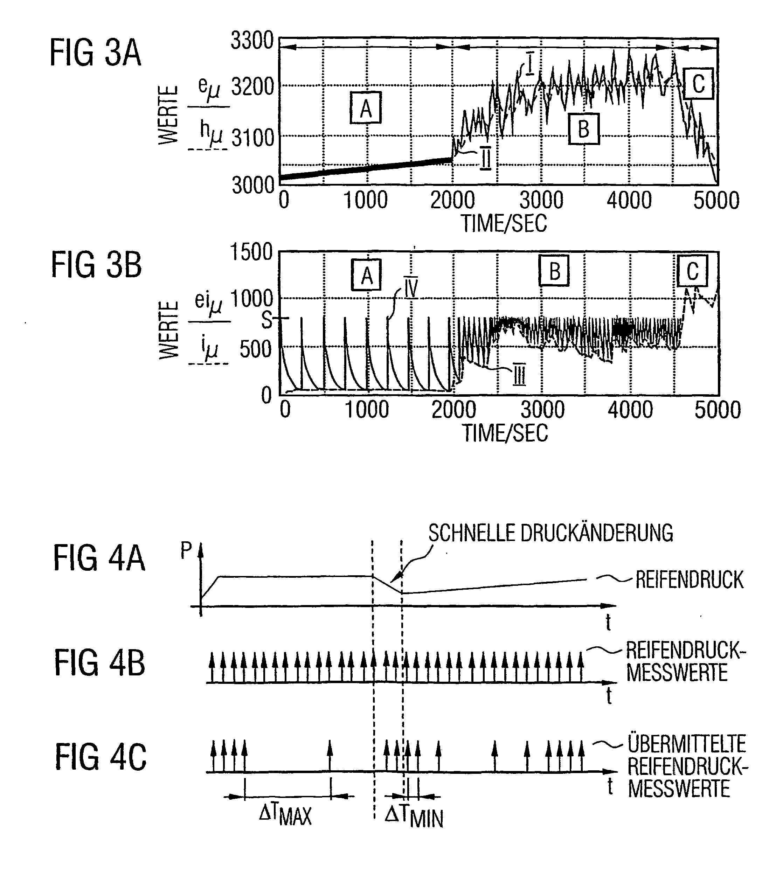

Im folgenden wird nun anhand der in den Figuren 3a-b dargestellten Diagramme erörtert, wie bei einem weiteren Ausführungsbeispiel des erfindungsgemäßen Verfahrens zum Überwachen eines Reifendrucks in einem Fahrzeugreifen die Häufigkeit der Übertragung von aktuellen Reifendruckmesswerten zu einer Empfangseinheit bestimmt wird.

Der Verlauf I in Figur 3a zeigt den Verlauf der erfassten Reifendruckmesswerte bei verschiedenen Fahrzeugzuständen A - C, wobei der Verlauf II den gemittelten bzw. tiefpassgefilterten Verlauf der erfassten Reifendruckmesswerte darstellt. Der Bereich A in dem Diagramm von Figur 3a beschreibt den Verlauf des Reifendrucks bei einem Fahrzeug, das beispielsweise in der Sonne parkt, wobei sich der Reifendruck des Fahrzeugreifens bedingt durch die geringe Änderung der Umgebungstemperatur nur langsam verändert. Der Bereich B stellt den Verlauf der Reifendruckmesswerte im Fahrzeugreifen während der Fahrt dar, wobei der temperaturbedingten Druckänderung hier ferner eine Druckänderung durch die Verformung des Reifens bei Kurvenfahrten oder durch das Überfahren von Unebenheiten überlagert ist. Der Bereich C stellt einen kontinuierlichen Druckverlust in dem Fahrzeugreifen beispielsweise aufgrund einer Beschädigung des Reifens dar.

In dem in Figur 3b dargestellten Diagramm stellt der Verlauf III die Standardabweichung der zeitlich aufeinander folgenden, erfassten Reifendruckmesswerte dar, wobei als Standardabweichung von Messwerten die durchschnittliche Abweichung der erfassten Messwerte von dem Mittelwert der Messwerte verstanden wird. Der Verlauf III, d. h. die Standardabweichung der erfassten Reifendruckmesswerte, stellt also bei dem in Figur 3b dargestellten Fall den von den erfassten Reifendruckmesswerten abgeleiteten reifendruckänderungsabhängigen Parameter dar.

Der Verlauf IV in Figur 3b stellt nun den Zählerstand eines Zählers dar, der beginnend bei einem Startwert dekrementiert wird, wobei in dem vorliegenden Fall der Zähler nicht linear zählt, sondern das Dekrement sich abhängig von dem Zählerstand ändert.

Dies wird erreicht, in dem der Zähler durch die Anwendung einer nicht-linearen Funktion gewichtet wird. Eine nicht-lineare Funktion kann beispielsweise durch die Sprungantwort oder die Pulsantwort eines digitalen Filters, z. B. eines IIR-Filters (IIR = infinite impulse response) erzeugt werden.

Diese Variante ermöglicht eine stärkere Differenzierung des Übertragungsabstände, weil nicht nur der Schnittpunkt zwischen Zähler und Schwellwert höher liegt, sondern der Zählerstand zusätzlich auch noch schneller dekrementiert wird. Dies kann beispielsweise erreicht werden, indem man die Impulsantwort eines IIR-Digitalfilters verwendet, wenn die Grenzfrequenz des Filters proportional zur statistischen Größe gewählt wird.

Im folgenden wird nun anhand der Fig. 3a-b der Ablauf des erfindungsgemäßen Verfahrens zur Überwachung der Reifendruck in einem Fahrzeugreifen erläutert.

Mit jeder erfolgten Messung eines Reifdruckwertes wird der Zähler beginnend bei einem Startwert S dekrementiert, wobei der Zähler in dem vorliegenden Fall nicht-linear zählt. Daraus ergibt sich der exponentiell abfallende Verlauf IV in Fig. 3b. Erreicht nun der Wert des Zählers den reifendruckänderungsabhängigen Parameter, d. h. die Standardabweichung des Verlaufs des Reifendrucks, wird die Sendeeinheit aktiviert, um den aktuellen Reifendruckmesswert an die Empfangseinheit zu übermitteln. Wie aus dem Diagramm von Figur 3d ersichtlich ist, wird in dem Bereich A, der ein in der Sonne parkendes Fahrzeug simuliert, mit einer minimalen Häufigkeit eine Übertragung der Reifendruckmesswerte ausgelöst.

In dem Bereich D, bei dem der temperaturbedingten Druckänderung hier eine Druckänderung durch die Verformung des Reifens bei Kurvenfahrten oder des Überfahrens von Unebenheiten überlagert ist, reagiert das System mit einer entsprechend erhöhten Übertragungsrate. In dem Bereich C, der einen kontinuierlichen Druckverlust aufgrund einer Beschädigung des Fahrzeugreifens darstellt, werden kontinuierlich Daten, d. h. Reifendruckmesswerte an die Empfangseinheit übermittelt.

Vorteilhaft bei der Anwendung einer nicht-linearen Funktion durch den Zähler ist, wie in Figur 3b dargestellt, ausgehend von dem Startwert die ersten Dekremente des Zählers relativ groß sind, so dass ein hoher reifendruckänderungsabhängiger Parameter schnell erfasst werden kann. Falls jedoch ein niedriger reifendruckänderungsabhängiger Parameter vorliegt, können durch den exponentiellen Verlauf der nicht-linearen Funktion, die auf den Zähler angewendet wird, die Intervalle zwischen dem Auslösen einer Übertragung eines aktuellen Reifendruckmesswertes relativ lang ausgedehnt werden.

Anhand der Figuren 4a-c wird nun nochmals in zusammengefasster Form die prinzipielle Änderung des Zeitabstands und damit der Häufigkeit der Übertragung von zeitlich aufeinander folgenden Reifendruckmesswerten dargestellt.

Die Fig. 4a zeigt den Reifendruck über der Zeit. In der Figur 4b ist die kontinuierliche Erfassung der zeitlich aufeinander folgenden Reifendruckmesswerte dargestellt. Die Figur 4c zeigt nun mit welcher Häufigkeit die erfassten aktuellen Reifendruckmesswerte zu der Empfangseinheit übertragen, wobei im Bereich einer schnellen Druckänderung viele aktuelle Reifendruckmesswerte übertragen werden, und wobei immer weniger aktuelle Reifendruckmesswerte übertragen werden, je geringer die Reifendruckänderung ist. So stellt sich im Ruhezustand eine maximale Zeitperiode $\Delta T_{max}$ Übertragung zwischen denen ein, die sich ständig verkürzt, je größer die Druckänderungen werden, die sich durch die Fahrt mit unterschiedlicher Geschwindigkeit auf unterschiedlichen Fahrbahnen ergibt, wobei sich bei einer sehr schnellen Druckänderung beispielsweise durch eine Beschädigung des Reifens, die minimale Zeitperiode $\Delta T_{min}$ zwischen den Übertragungen ergibt.

Bei der vorliegenden Erfindung ist es ferner möglich, Temperaturwerte des Gasvolumens in dem Fahrzeugreifen zu verarbeiten. So kann beispielsweise der Quotient aus einem erfassten Reifendruckmesswert und einem Temperaturmesswert verarbeitet werden. Dies ist dahingehend vorteilhaft, da unter der Annahme, dass das Volumen des Reifens sich nicht signifikant verändert, sich bei allen durch Temperaturveränderungen bedingten Druckänderungen dieser Quotient nicht verändern sollte, wobei unter Berücksichtigung des "idealen Gasgesetzes" gilt: p*V/T= const., wobei p der Reifendruck, V das Reifenvolumen und T die Temperatur ist.

Dadurch kann eine durch Gasverlust oder Verformung des Reifens verursachte Druckänderung von einer überlagerten temperaturbedingten Änderung unterschieden werden. Daraus lässt sich insbesondere der Stillstand des Wagens ableiten, wobei in diesem Zustand die Übertragungshäufigkeit besonders drastisch reduziert werden kann. Betrachtet man außerdem den Mittelwert dieses Quotienten über einen Zeitraum, so dürfte dieser nahezu konstant sein, wenn nicht Gas aus dem Reifen entweicht. Dies stellt wiederum den wichtigsten zu erfassenden Zustand für einen Reifendrucksensor dar. Dabei ist zu beachten, dass die Temperaturmessung jedoch nicht jedes Mal durchgeführt werden muss, so dass das Zeitintervall für eine Temperaturmessung gegenüber einer Reifendruckmessung (z. B. bei $\Delta T_{min} \approx 1s$) verlängert sein kann, z. B. 8s. Die Batteriespannungsmessung kann in noch längeren Zeitabständen erfolgen, z. B. 64 Sekunden.

Ferner sollte bei der vorliegenden Erfindung beachtet werden, dass, wenn die Übermittlung eines aktuellen Reifendruckmesswertes ausgelöst wird, beliebige physikalische Parameter, wie Temperatur, Batteriespannung usw., und auch statistische Parameter, wie die Standardverteilung des Temperaturverlaufs usw., übermittelt werden können. Statistische Parameter sind ferner beispielsweise die Differenz zweier aufeinander folgender Messwerte, ein tiefpassgefilterter oder über die zurückliegenden Abtastwerte gemittelter Druckwert, statistische Größen die die Standardabweichung oder der Durchschnitt des Rauschens gegenüber einem der zuvor genannten Mittelwerte oder der Quotient Ausdruck und Temperatur der im Ruhezustand und im Mittelwert annähernd konstant sein sollte. Bekanntermaßen ist die Standardabweichung der Durchschnitt der quadrierten Differenzen zum Mittelwert. Als Durchschnitt des Rauschens wird im Zusammenhang der vorliegenden Erfindung der Durchschnitt der nicht quadrierten Absolutwerte der o.g. Differenz bezeichnet.

Es sollte ferner beachtet werden, dass es bei dem erfindungsgemäßen Verfahren zum Überwachen eines Reifendrucks in einem Fahrzeugreifen auch denkbar ist, die Reifendruckmesswerte nicht nur kontinuierlich zu erfassen, sondern dass das Zeitraster der Erfassung der Reifendruckmesswerte beispielsweise auch von den erfassten Reifendruckmesswerten abgeleitet werden kann. Dadurch ergibt sich eine weitere Verringerung der mittleren Leistungsaufnahme der Sensoranordnung zur Reifendrucküberwachung.

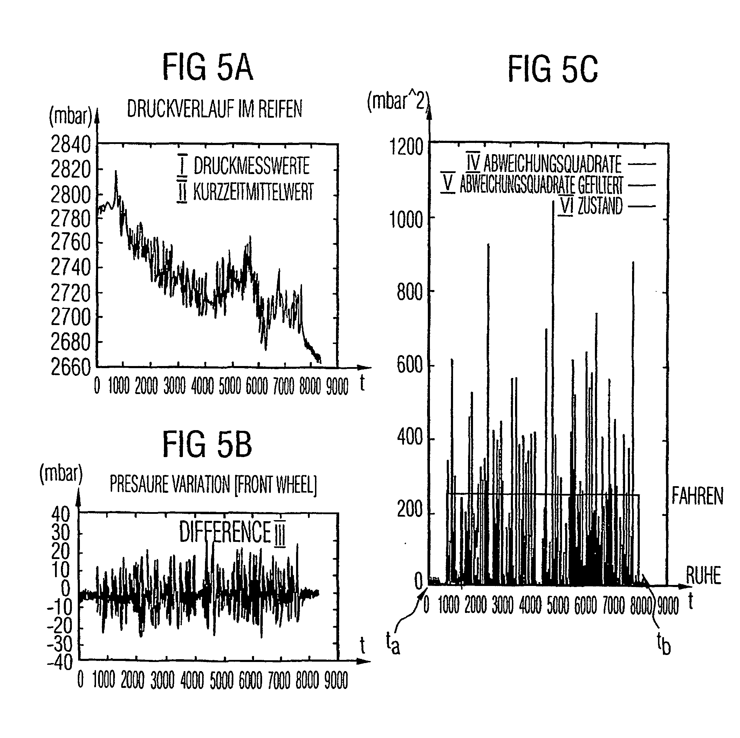

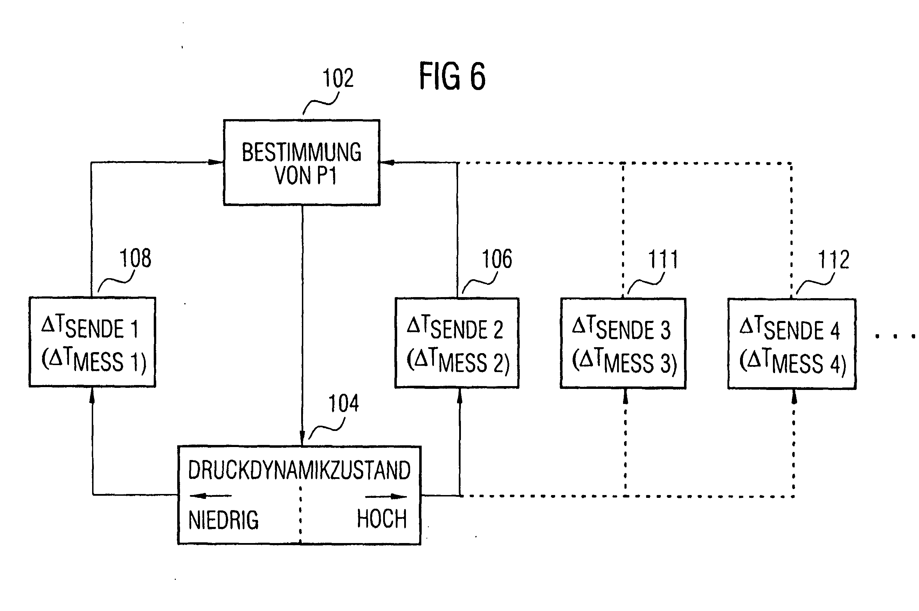

Im folgenden wird nun anhand der Fig. 5a-c und Fig. 6 die erfindungsgemäße Vorgehensweise erläutert, bei der aus einer Anzahl von vorangehenden Reifendruckmesswerten ein momentaner Druckdynamikzustand in einem Reifen eines Kraftfahrzeugs ermittelt und klassifiziert werden kann, wobei der zeitliche Abstand $\Delta T_{sende}$ zwischen aufeinanderfolgenden Übertragungszeitpunkten der Reifendruckmesswerte und/oder auch der zeitliche Abstand $\Delta T_{mess}$ zwischen aufeinanderfolgenden Erfassungszeitpunkten der Reifendruckmesswerte abhängig von der ermittelten momentanen Druckdynamikzustand bzw. der Klassifizierung der ermittelten Druckdynamikzustände eingestellt wird.

Dabei kann der Druckdynamikzustand in dem Reifen des Fahrzeugs in verschiedene Klassen von Druckdynamikzuständen eingeteilt werden, die wiederum verschiedene Fahrsituationen des Fahrzeugs wiedergeben, wie einen Ruhezustand, z. B. Stillstand oder Parken, oder einen oder mehrere Fahrzustände des Fahrzeugs, wobei der zeitliche Abstand $\Delta T_{sende}$ zwischen aufeinanderfolgenden Übertragungszeitpunkten der Reifendruckmesswerte und/oder auch der zeitliche Abstand $\Delta T_{mess}$ zwischen aufeinanderfolgenden Erfassungszeitpunkten der Reifendruckmesswerte durch eine Reifendruckmesseinrichtung während einer Fahrsituation mit einem niedrigen Druckdynamikzustand in dem Reifen des Fahrzeugs länger gewählt wird als während eines erfassten hohen Druckdynamikzustand in dem Reifen des Fahrzeugs, um während hoher Druckdynamikzustände in dem Reifen des Fahrzeugs eine in ausreichend kurzen Intervallen erfolgende Überwachung des Reifendrucks und damit des Reifenzustands zu ermöglichen.

Die Unterteilung der zeitlichen Abstände $\Delta T_{sende}$ zwischen aufeinanderfolgenden

Übertragungszeitpunkten in Abhängigkeit von den verschiedenen ermittelten momentanen Druckdynamikzuständen bzw. der Klassifizierung der Druckdynamikzustände in einem Reifen eines Fahrzeugs wird beispielsweise aus Sicherheitsgründen vorgenommen, da bei Fahrzuständen mit steigenden Reifenbelastungen und damit höheren Druckdynamikzuständen auch eine häufigere Überprüfung der Reifendruckwerte stattfinden sollte, um so frühzeitig wie möglich eine Beschädigung, einen Druckverlust, usw. des Fahrzeugreifen erkennen und dem Fahrzeugführer anzeigen zu können.

Bezüglich der folgenden Beschreibung sollte beachtet werden, dass der zeitliche Abstand zwischen aufeinanderfolgenden Übertragungszeitpunkten der Reifendruckmesswerte allgemein, d. h. ohne eine Bezugnahme auf die Druckdynamikzustände, mit $\Delta T_{sende}$ bezeichnet wird, wobei der eingestellte zeitliche Abstand bezugnehmend auf einen erfassten, niedrigen Druckdynamikzustand (bzw. keine Druckdynamik) in dem Reifen des Fahrzeugs mit $\Delta T_{sende1}$ und bezugnehmend auf einen erfassten, höheren Druckdynamikzustand in einem Reifen des Fahrzeugs mit $\Delta T_{sende2}$ bezeichnet wird.

Bezüglich der folgenden Beschreibung sollte ferner beachtet werden, dass das vorgestellte erfindungsgemäße Konzept gleichermaßen auf die geeignete Einstellung der zeitlichen Abstände $\Delta T_{mess}$ ($\Delta T_{mess1}$, $\Delta T_{mess2}$, ...) zwischen aufeinanderfolgenden Erfassungszeitpunkten der Reifendruckmesswerte angewendet werden kann.

Bei der im folgenden detailliert erläuterten, erfindungsgemäßen Vorgehensweise wird ausgenutzt, dass sich im Fahrbetrieb eines Fahrzeugs sogenannte "dynamische Lastumverteilungen" ergeben, die zu einer Veränderung des Reifendrucks in den Fahrzeugreifen führen, wobei hohe bzw. niedrige Änderungen des Druckverlaufs in einem Fahrzeugreifen einen erhöhten bzw. niedrigeren Druckdynamikzustand hervorrufen. So werden beispielsweise bei einer Kurvenfahrt des Fahrzeugs die äußeren Fahrzeugräder stärker belastet, so dass folglich auch der Reifendruck in diesen Fahrzeugreifen ansteigt, während der Reifendruck in den Fahrzeugreifen der kurveninneren, entlasteten Fahrzeugreifen sinkt. Vergleichbare dynamische Lastumverteilungen in einem Fahrzeug treten ferner beim Bremsen oder Beschleunigen des Fahrzeugs zwischen den Fahrzeugreifen der Hinterachse und der Vorderachse auf. So werden üblicherweise beim Abbremsen eines Fahrzeugs die Fahrzeugreifen der Vorderachse höher belastet, während bei Beschleunigungen des Fahrzeugs die angetriebene Achse(n) des Fahrzeugs stärker belastet werden, und damit der Reifendruck in diesen Fahrzeugreifen ansteigt. Weitere Reifendruckänderungen während des Fahrzeugbetriebs eines Kraftfahrzeugs treten beispielsweise beim Überfahren von Bodenunebenheiten auf.

Die während des Fahrbetriebs des Kraftfahrzeugs zu erwartenden Reifendruckänderungen in den Fahrzeugreifen weisen üblicherweise bedingt durch die Zeitdauer typischer Fahrsituationen, wie Kurvenfahrten, Beschleunigen, usw., eine Druckänderungsdynamik von wenigen Sekunden, d. h. einen hohen Druckdynamikzustand, auf. Derartige Reifendruckänderungen sind aber während des Stillstands bzw. Parkzustands des Fahrzeugs nicht zu erwarten, da der Reifendruck in einem intakten Fahrzeugreifen hier nur aufgrund von Temperaturänderungen schwankt und somit eine weit geringere Änderung der Druckdynamikzustände in einem Bereich von Minuten oder auch Stunden zeigt.

Im folgenden wird nun ausführlich erläutert, wie die während bestimmter Fahrsituationen des Fahrzeugs auftretenden Reifendruckänderungen bzw. Druckdynamikzustände in einem Fahrzugreifen ausgewertet und in bestimmte Klassen für die Druckdynamikzustände eingestuft werden können, so dass ohne die Verwendung eines Beschleunigungssensors oder eines andersartigen Rolldetektors eine Entscheidung getroffen werden kann, in welcher Fahrsituation sich das Fahrzeug gerade befindet.

Anhand des in Fig. 6 dargestellten Flussdiagramms 100 wird nun die erfindungsgemäße Vorgehensweise zur Ermittlung der momentanen Fahrsituation des Fahrzeugs dargestellt, um bei dem erfindungsgemäßen Verfahren zum Überwachen eines Reifendrucks in einem Fahrzeugreifen den zeitlichen Abstand ($\Delta T_{sende}$) zwischen aufeinanderfolgenden Übertragungszeitpunkten der Reifendruckmesswerte abhängig von der ermittelten Fahrsituation einstellen zu können.

Wie bereits oben angegeben ist, sollte ferner beachtet werden, dass das im folgenden vorgestellte erfindungsgemäße Konzept gleichermaßen auf die geeignete Einstellung der zeitlichen Abstände $\Delta T_{mess}$ zwischen aufeinanderfolgenden Erfassungszeitpunkten der Reifendruckmesswerte angewendet werden kann.

Wie in Schritt 102 des Flussdiagramms 100 dargestellt ist, wird zuerst ein Reifendruck-abhängiger Fahrsituationsparameter P1 ermittelt, indem ein erfasster Reifendruckmesswert bzw. eine Mehrzahl von aufeinanderfolgenden Reifendruckmesswerten ausgewertet wird.

Dazu wird der Reifendruck in den Fahrzeugreifen beispielsweise in Zeitabständen $\Delta T_{mess}$ gemessen, die kürzer oder gleich dem Zeitraum sind, der für eine Erkennung des Übergangs des Fahrzeugs zwischen einem Ruhezustand und einem Fahrzustand angestrebt wird. Die Messzeiten, d. h. die Zeitabstände zwischen aufeinanderfolgenden Erfassungszeitpunkten der Reifendruckmesswerte, können sich erfindungsgemäß im Fahrzustand des Fahrzeugs von den erfassten Reifendruckmesswerten während des Ruhezustands des Fahrzeugs unterscheiden, wobei jedoch im allgemeinen die vorangehende erfasste Fahrsituation des Fahrzeugs berücksichtigt wird.

Aus den aufeinanderfolgenden Reifendruckmessungen wird nun beispielsweise durch eine Filterung ein sogenannter Kurzzeitmittelwert des erfassten Reifendruckverlaufs gebildet. Fig. 5a zeigt beispielhaft einen ermittelten Reifendruckverlauf I in einem Fahrzeugreifen über der Zeit und die entsprechend ermittelten Kurzzeitmittelwerte (Verlauf II in Fig. 5a) des Reifendruckverlaufs I.

In Fig. 5a sind die Reifendruckmesswerte beispielhaft in einem zeitlichen Abstand $\Delta T_{mess}$ von 0,5 Sekunden gemessen worden, wobei in der Praxis Werte für den zeitlichen Abstand $\Delta T_{mess1}$ (bei einem niedrigen Druckdynamikzustand) beispielsweise in einem Bereich von 0,5 bis 120 Sekunden bevorzugt werden, und Werte für den zeitlichen Abstand $\Delta T_{mess2}$ (bei einem höheren Druckdynamikzustand) beispielsweise in einem Bereich von 0,1 bis 5 Sekunden bevorzugt werden. Die korrespondierenden zeitlichen Abstände für die Übermittlungszeitpunkte der ermittelten Reifendruckmesswerte liegen beispielsweise für geringe Druckdynamikzustände zwischen 15 und 120 Minuten und für hohe Druckdynamikzustände zwischen 5 und 60 Sekunden.

Der Kurzzeitmittelwert, wie er in Fig. 5a dargestellt ist, wurde beispielhaft mit einem IIR-Filter zweiter Ordnung berechnet, das die folgende Übertragungsfunktion aufweist:

$$H_{IIR1}(z) = \left(\frac{1-a}{1-a \cdot z^{-1}}\right)^2 ;$$

dabei stellt der Parameter a die Konstante dar, die die Grenzfrequenz des IIR-Filters zweiter Ordnung bestimmt.

Die Ausführungsform des verwendeten IIR-Filters kann beispielsweise mit dem IIR-Digitalfilter aus Kästchen 32 von Fig. 1 identisch sein, da in diesem Fall zur Mehrfachnutzung des IIR-Filters die gleiche Hardware-Anordnung verwendet werden kann. Eine Mehrfachnutzung könnte für den Fall interessant sein, wenn man die Entscheidung über die Sendezeitpunkte nach dem Verfahren von Fig. 1 dynamisch gestalten möchte, was den Vorteil des Erhalts der Korellation zwischen Druckerfassungsereignis und Übertragungszeitpunkt bietet, aber trotzdem unterschiedliche Messraten verwendet werden sollen.

Im folgenden wird nun bei jedem Reifendruckmesswert die Differenz der Reifendruckmesswerte zu dem Kurzzeitmittelwert der Reifendruckmessung bestimmt, wie dies beispielhaft in Fig. 5b anhand der Reifendruckschwankung als Verlauf III über der Zeit dargestellt ist. Es sollte beachtet werden, dass die Kurzzeitmittelwertbildung über eine beliebige Anzahl von vorangehend erfassten (vorzugsweise aufeinanderfolgenden) Reifendruckmesswerten vorgenommen werden kann, wobei es andererseits auch möglich ist, die Druckdifferenz direkt aus nur zwei aufeinanderfolgenden Reifendruckmesswerten zu gewinnen, ohne einen Kurzzeitmittelwert über mehrere voran gehende Reifendruckmesswerte zu bilden.

Anstelle der IIR-Tiefpass-Filterung und Differenzbildung zwischen Messwert und gefiltertem Wert, was letztendlich eine Hochpassfilterung zur Erzeugung der Differenzwerte darstellt, kann auch eine Bandpass-Filterung eingesetzt werden, wodurch nicht nur wie bei einem Hochpass die niederfrequenten Druckschwankungen aufgrund von Temperaturänderungen sondern auch Signalanteile, die für Fahrbewegungen zu hochfrequent sind, herausgefiltert werden.

Die Differenzwerte, wie sie in Fig. 5b dargestellt sind, werden nun beispielsweise quadriert, um die in Fig. 5c als Verlauf IV dargestellten Differenzquadrate (Abweichungsquadrate) der Reifendruckmesswerte zu erhalten. Anstelle der Differenzquadrate der Reifendruckmesswerte könnten aber auch einfach die Differenzbeträge der Reifendruckmesswerte im folgenden verwendet bzw. weiterverarbeitet werden.

Daraufhin werden die Quadrate der Differenzwerte der Reifendruckmesswerte wiederum mit einem IIR-Filter gefiltert, um einen Kurzzeitmittelwert der Abweichungsquadrate zu bestimmen, der einen bevorzugten Reifendruck-abhängigen Fahrsituationsparameter P1 gemäß dem erfindungsgemäßen Konzept darstellt. Das IIR-Filter, weist dabei folgendes Übertragungsverhalten auf:

$$H_{IIR2}(z)\left(\frac{1-b}{1-b \cdot z^{-1}}\right)^2$$

wobei die Konstante b die Grenzfrequenz dieses Filters bestimmt. In Fig. 5c sind die gefilterten Abweichungsquadrate der quadrierten Differenzwerte der Druckmesswerte als Verlauf V in Fig. 5c dargestellt.

Bei dem durch das Bezugszeichen 104 dargestellten Verfahrensschritt in dem Flussdiagramm 100 wird nun der Reifendruckabhängige Funktionsparameter P1 mit einem ersten Vergleichsparameter, einer Vergleichsschwelle bzw. einem Vergleichswert PV1 verglichen, um zu entscheiden, ob hohe oder niedrige Druckdynamikzustände in dem Fahrzeugreifen vorliegen, d. h. in welcher Fahrsituation sich das Fahrzeug befindet. Dieser Vergleichsparameter PV1 wird beispielsweise über eine Mehrzahl von zurückliegenden, erfassten Reifendruckmesswerten ermittelt.

Ausgehend beispielsweise von einem Ruhezustand des Fahrzeugs wird der Reifendruck in den Fahrzeugreifen vorzugsweise in Zeitabständen $\Delta T_{mess}$ gemessen, die kürzer oder gleich dem Zeitraum sind, innerhalb dessen ein Übergang des Fahrzeugs zwischen einem Ruhezustand und einem Fahrzustand erkannt werden soll.

So wird nun von einer Klassifizierung für relativ niedrige Druckdynamikzustände, die beispielsweise einen Ruhezustand des Fahrzeugs wiedergeben, in eine Klassifizierung für relativ hohe Druckdynamikzustände, die beispielsweise einen Fahrzustand des Fahrzeugs wiedergeben, gewechselt, wenn innerhalb einer vorgegebenen Anzahl (1, 2, 3, ...) von zurückliegenden Messungen der Reifendruckmesswerte eine vorgegebene Anzahl (1, 2, 3, ...) von Überschreitungen des aktuellen Reifendruck-abhängigen Funktionsparameters P1, d. h. beispielsweise des aktuellen Differenzquadrats der Reifendruckmesswerte, über den ersten Vergleichsparameter PV1 auftritt, wobei der erste Vergleichsparameter vorzugsweise ein vorgegebenes, ganzzahliges Vielfaches des Kurzzeitmittelwerts der Differenzquadrate ist. Natürlich kann aber auch ein nicht-ganzzahliges Vielfaches des Kurzzeitmittelwerts der Differenzquadrate verwendet werden.

Im einfachsten Fall kann also bei bereits einer Überschreitung des ersten Vergleichsparameters PV1 durch den Reifendruckabhängigen Funktionsparameters P1 ein Wechsel der Klassifizierung des Druckdynamikzustands in dem Fahrzeugreifen vorgenommen werden.

Wenn von der Klassifizierung für relativ niedrige Druckdynamikzustände in die Klassifizierung für relativ hohe Druckdynamikzuständen gewechselt wird, werden die Reifendruckmesswerte mit einem verringerten zeitlichen Abstand $\Delta T_{sende2}$ ($\Delta T_{sende2} < \Delta T_{sende1}$) zwischen aufeinanderfolgenden Übertragungszeitpunkten der Reifendruckmesswerte übermittelt, wie dies in dem Flussdiagramm 100 durch das Kästchen 106 dargestellt ist.

Wenn nun dagegen innerhalb einer vorgegebenen Anzahl von Messungen (1, 2, 3, ...) genau eine oder eine vorgegebene Anzahl von Unterschreitungen des Reifendruck-abhängigen Fahrsituationsparameters P1, d. h. vorzugsweise des aktuellen Differenzquadrats der Reifendruckschwankungen, unter einen weiteren, zweiten Vergleichsparameter PV2 auftritt, wobei dies in Schritt 104 des Flussdiagramms 100 ermittelt wird, wird von der Klassifizierung für relativ hohe Druckdynamikzustände in die Klassifizierung für relativ niedrige Druckdynamikzuständen gewechselt. Der zweite Vergleichsparameter PV2 ist beispielsweise ein vorgegebener ganzzahliger Bruchteil des Kurzzeitmittelwerts der Differenzquadrate. Natürlich kann aber auch ein nicht-ganzzahliger Bruchteil des Kurzzeitmittelwerts der Differenzquadrate verwendet werden.

Bezüglich der Einstellung der zeitlichen Abstände zwischen aufeinanderfolgenden Übertragungszeitpunkten der Reifendruckmesswerte bedeutet dies, dass nun der zeitliche Abstand $\Delta T_{sende1}$ verwendet wird, wie dies in Kästchen 108 des Flussdiagramms 100 dargestellt ist, um die Reifendruckmesswerte in größeren zeitlichen Abständen $\Delta T_{sende1}$ zwischen aufeinanderfolgenden Zeitpunkten zu übermitteln.

Bezüglich des ersten und zweiten Vergleichsparameters sollte beachtet werden, dass diese auch identisch gewählt werden können, so dass beispielsweise eine feste Vergleichsschwelle zugrunde gelegt wird, deren Unterschreiten bzw. Überschreiten (in Schritt 104) bewertet wird, um die momentane Fahrsituation zu ermitteln.

Es sollte nun beachtet werden, dass der erste Vergleichsparameter PV1 durch einen Maximalwert $PV1_{max}$ einer Reifendruckänderung begrenzt sein kann, um dadurch sicherzustellen, dass hohe Druckabweichungen, die im Ruhezustand des Fahrzeugs nicht plausibel sind, immer zu einem Wechsel der Klassifizierung in eine Klassifizierung für hohe Druckdynamikzustände und damit zu einer häufigeren Überwachung des Reifendrucks führen. Dies ist erforderlich, da bei einer großen Anzahl von aufeinanderfolgenden hohen Druckabweichungen auch der Kurzzeitmittelwert der Druckabweichungen sehr hoch ansteigt, so dass das Vielfache der Kurzzeitmittelwerte, die den ersten Vergleichsparameter PV1 bilden erst sehr spät (wenn überhaupt) überschritten wird. Damit soll sichergestellt werden, dass bei dem Überschreiten eines Maximalwerts $PV1_{max}$ einer Reifendruckänderung automatisch der zeitliche Abstand zwischen aufeinanderfolgenden Erfassungszeitpunkten der Reifendruckmesswerte verringert wird, um eine sichere Überwachung der Reifendruckmesswerte in kurzen Erfassungsintervallen zu gewährleisten.

Ferner sollte beachtet werden, dass der erste Vergleichsparameter PV1 zur Beurteilung des Reifendruck-abhängigen Fahrsituationsparameters P1 auch durch einen Minimalwert $PV1_{min}$ begrenzt sein kann, um sicherzustellen, dass Reifendruckabweichungen, die keinen eindeutige Klassifizierung der Druckdynamikzustände kennzeichnen, nicht zu einem unnötigen Wechsel der Klassifizierung in eine Klassifizierung für hohe Druckdynamikzustände und damit zu einer unnötigen Belastung der Batterie des Reifendrucküberwachungssystems führen. Die Verwendung des Minimalwerts $PV1_{min}$ für den ersten Vergleichsparameter PV1 wird vorzugsweise eingesetzt, um sicherzustellen, dass nach einer großen Anzahl von aufeinanderfolgenden sehr niedrigen Reifendruckänderungen nicht bereits eine minimale Änderung des Reifendrucks, die aber ein Vielfaches des durch die vorangegangenen Messwerte mit geringer Änderung abgesenkten Kurzzeitmittelwerts betragen kann, zu einem Überschreiten eines äußerst niedrigen ersten Vergleichsparameters PV1 und damit zu einer nicht erforderlichen Änderung der Klassifizierung in eine Klassifizierung für hohe Druckdynamikzustände (zu einer Einstufung in einen Fahrzustand des Fahrzeugs) führt.

Ferner sollte beachtet werden, dass der zweite Vergleichsparameter PV2 durch einen Maximalwert $PV2_{max}$ begrenzt werden kann, um sicherzustellen, dass nach hohen Druckabweichungswerten während eines ruhigeren Fahrzustands des Fahrzeuge nicht fälschlicherweise die Klassifizierung in eine Klassifizierung für niedrige Druckdynamikzustände gewechselt wird.

Ferner wird vorzugsweise auch ein Minimalwert $PV2_{min}$ für den zweiten Vergleichsparameter PV2 vorgesehen, um dadurch sicherzustellen, dass über eine lange Zeitdauer für den Fahrzustand unplausibel kleine Druckabweichungen in jedem Fall zu einem Wechsel in eine Klassifizierung für niedrige Druckdynamikzustände (Wechsel in den Ruhezustand des Fahrzeugs) führen.

Es sollte beachtet werden, dass durch eine Staffelung der Vielfachen und Bruchteile, die als Schaltgrenzen zum Bestimmen der Fahrsituation des Fahrzeugs definiert sind, zusätzliche Zustände definiert werden können, d. h. beispielsweise Stillstand, Fahren mit geringer Dynamik, Fahren mit hoher Dynamik, Alarmzustand usw. Dies ist beispielsweise durch die zusätzlichen Kästchen 110, 112 usw. des Flussdiagramms 100 dargestellt, mittels derer entsprechend der ermittelten Fahrsituation verschiedene zeitliche Abstände $\Delta T_{mess3}$, $\Delta T_{mess4}$ usw. zwischen aufeinanderfolgenden Erfassungszeitpunkten der Reifendruckmesswerte eingestellt werden können, um je nach Fahrsituation und Fahrdynamik eine zuverlässige Erfassung der Reifendruckmesswerte zu gewährleisten. Eine höhere Fahrdynamik bedeutet im allgemeinen eine höhere Belastung für die Reifen und auch eine schnellere zeitliche Änderung der Belastungszustände für die Reifen und damit auch der Druckdynamikzustände. So sollte bei einer erhöhten Belastung der Reifen auch der zeitliche Abstand der Übertragungszeitpunkte der reifenspezifischen Parameter reduziert werden, wobei erfindungsgemäß gilt:

$$\Delta T_{sende1} > \Delta T_{sende2} > \Delta T_{sende3} > \Delta T_{sende4} \cdots$$

Entsprechend kann bei einer erhöhten Belastung der Reifen auch der zeitliche Abstand der Erfassungszeitpunkte der reifenspezifischen Parameter reduziert werden, wie dies im folgenden noch erläutert wird, wobei dann erfindungsgemäß optional gilt:

$$\Delta T_{mess1} > \Delta T_{mess2} > \Delta T_{mess3} > \Delta T_{mess4} \cdots$$

In Fig. 5c ist beispielhaft eine mögliche Zuordnung der ermittelten Reifendruckmesswerte zu verschiedenen Klassifizierungen für die Druckdynamikzustände und damit zu verschiedenen Fahrsituationen eines Kraftfahrzeugs dargestellt. Wie in Fig. 5c dargestellt ist, ist das Fahrzeug zunächst geparkt (vgl. Verlauf VI in Fig. 5c), wobei zu dem Zeitpunkt $t_a$ das Fahrzeug zu fahren beginnt. Dies führt zu einem Wechsel der Klassifizierung der Druckdynamikzustände und damit zu einem Zustandswechsel der ermittelten Fahrsituation, d. h. zu einer Änderung des zeitlichen Abstands $\Delta T_{sende}$ von $\Delta T_{sende1}$ in $\Delta T_{sende2}$ zwischen aufeinanderfolgenden Übertragungszeitpunkten der Reifendruckmesswerte, nachdem die Differenzquadrate dreimal in Folge das Achtfache ihres Mittelwerts überschritten haben. Dieses (rein beispielhaft gewählte) Kriterium für den Reifendruck-abhängigen Fahrsituationsparameter P1 und den ersten und zweiten Vergleichsparameter PV1, PV2, führt zu einem Wechsel der Klassifizierung und damit der erfassten Fahrsituation in die Klassifizierung für hohe Druckdynamikzustände (den Fahrzustand). Die Obergrenze für den Maximalwert des Kurzzeitmittelwerts $PV1_{max}$, der noch im Kriterium berücksichtigt wird, liegt bei einem Wert von 8, d. h. das Achtfache des Kurzzeitmittelwerts entspricht also einem Wert von 64 für das Abweichungsquadrat.

Wie in Fig. 5c dargestellt ist, fährt das Fahrzeug etwa zwei Stunden (vgl. Verlauf VI in Fig. 5c), wobei das Fahrzeug kurz vor dem Zeitpunkt $t_b$ wieder geparkt wird. Dies führt wiederum zu einem Klassifizierungswechsel, nachdem die Differenzquadrate 256 mal in Folge ihren Mittelwert unterschritten haben. Dieses wiederum rein beispielhaft gewählte Kriterium führt zu einen Klassifizierungswechsel in die Klassifikation für niedrige Druckdynamikzustände (Ruhezustand), so dass der zeitliche Abstand zwischen aufeinanderfolgenden Übertragungszeitpunkten der Reifendruckmesswerte wieder auf das Zeitintervall $\Delta T_{sende1}$ eingestellt wird. Eine Untergrenze für den Minimalwert des Kurzzeitmittelwerts, der im Kriterium noch Berücksichtigung findet, wurde bei dem in Fig. 5c dargestellten Ausführungsbeispiel auf einen Wert von 32 eingestellt.

Es sollte beachtet werden, dass das Mittelwertfilter (IIR-Filter) für die Differenzquadrate mit dem Wechsel in die Klassifizierung für niedrige Druckdynamikzustände vorzugsweise wieder auf einen Startwert zurückgesetzt wird, der das Rauschen des Reifendrucksensors und der für die Messung verwendeten Elektronik repräsentiert. Dies ist erforderlich, um zu vermeiden, dass bei einem erneuten Anfahren des Fahrzeugs das Reifendrucküberwachungssystem aufgrund des immer noch hohen Kurzzeitmittelwerts der Differenzquadrate unnötig lange in einer Klassifizierung für niedrige Druckdynamikzustände verbleibt.

Zusätzlich oder alternativ zu der geeigneten Einstellung des zeitlichen Abstands zwischen aufeinanderfolgenden Übertragungen der aktuellen Reifendruckmessergebnisse eines Reifendrucksensors oder anderer Reifenzustandsparameter ist es mit der vorliegenden Erfindung ferner möglich, entsprechend des jeweils ermittelten Druckdynamikzustands oder der jeweiligen Klassifizierung der Druckdynamikzustände eine momentane Fahrsituation des Fahrzeugs zu ermitteln.

Abhängig von der ermittelten momentanen Fahrsituation des Fahrzeugs kann nun erfindungsgemäß ferner der zeitliche Abstand $\Delta T_{mess}$ ($\Delta T_{mess1}$, $\Delta T_{mess2}$, ...) zwischen aufeinanderfolgenden Erfassungszeitpunkten der Reifendruckmesswerte, die durch die Reifendruckmesseinrichtung erfasst werden, entsprechend eingestellt werden. Dabei wird vorzugsweise bei einer Klassifizierung für niedrigere Druckdynamikzustände in dem Reifen des Fahrzeugs der zeitliche Abstand zwischen aufeinanderfolgenden Erfassungszeitpunkten länger gewählt als der zeitliche Abstand zwischen aufeinanderfolgenden Erfassungszeitpunkten bei einer Klassifizierung für höhere Druckdynamikzustände in dem Reifen des Fahrzeugs. Diese Vorgehensweise eröffnet vorteilhafterweise ein weiteres Energieeinsparpotential und damit eine mögliche weitere Erhöhung der Lebensdauer der erfindungsgemäßen Reifendrucküberwachungsanordnung.

Wie nun in dem Flussdiagramm 100 in dem Kästchen 102 dargestellt ist, werden die aktuellen Reifendruckmesswerte zu den jeweils eingestellten zeitlichen Abständen $\Delta T_{mess1}$ oder $\Delta T_{mess2}$ erfasst und daraus der Reifendruck-abhängige Fahrsituationsparameter P1 ermittelt.

Bezüglich des vorliegenden erfindungsgemäßen Konzepts zur Überwachung eines Reifendrucks in einem Fahrzeugreifen kann ferner noch auf das Nyquist-Theorem (auch als Shannon-Theorem bekannt) verwiesen werden, wobei gilt:

$$F_s \geq 2 \cdot F_b,$$

wobei $F_s$ die Abtastfrequenz (Nyquist-Frequenz) und $F_b$ die Frequenz des abzutastenden Signals darstellt. Es wird deutlich, dass die Abtastfrequenz wenigstens doppelt so groß sein sollte, wie die Bandbreite des abgetasteten Signals (z. B. die Änderungsrate des Druckverlaufs in einem Fahrzeugreifen). Weiß man also, dass es einen Zustand geringer Druckdynamik in dem Fahrzeugreifen gibt, bei dem sich Druckänderungen bedingt durch Änderungen der Umgebungstemperatur nur im Minuten oder Stundenbereich ergeben, so kann man natürlich in diesem Zustand weniger Messwerte durch Messungen in größeren zeitlichen Abständen aufnehmen, als es in einem anderen Zustand höherer Druckdynamik, bei dem sich Druckänderungen aus Laständerungen durch Fahrsituationen im Sekundenbereich in dem Fahrzeugreifen ergeben, erforderlich ist.

Es sollte beachtet werden, dass abhängig von den Gegebenheiten das erfindungsgemäße Reifendrucküberwachungsverfahren in Hardware, beispielsweise durch eine Hardware-Statemachine, oder in Software implementiert werden kann. Die Implementation kann auf einem digitalen Speichermedium, insbesondere einem Flash-Speicher, einem EEPROM-Speicher (EEPROM = electrically erasable programmable read-only memory = elektrisch löschbarer Nur-LeseSpeicher) oder einem ROM-Speicher (ROM = read-only memory) oder auch einer Diskette oder CD (CD = Compact Disk) mit elektronisch auslesbaren Steuersignalen erfolgen, die so mit einem programmierbaren Computersystem, vorzugsweise einer Mikrokontrollereinrichtung, zusammenwirken können, dass das erfindungsgemäße Reifendrucküberwachungsverfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

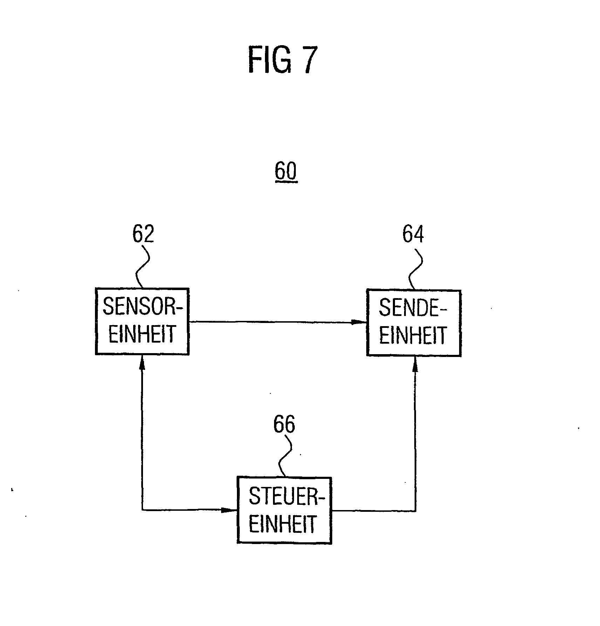

In Fig. 7 ist die erfindungsgemäße Vorrichtung 60 zum Überwachen eines Referenzdruckes in einem Reifen eines Fahrzeugs dargestellt. Die Vorrichtung umfasst eine Druckmesseinrichtung 62 zum Erfassen zeitlich aufeinander folgender Reifenmesswerte, eine Sendeeinheit 64 zum Übertragen zumindest eines Teils der Reifendruckmesswerte zu einer Empfangseinheit, und eine Steuereinheit 66 zum Steuern der Häufigkeit der Übertragung der Reifendruckmesswerte durch die Sendeeinheit in Abhängigkeit von den erfassten Reifendruckwerten und/oder optional zum Steuern der Häufigkeit der Erfassung der Reifendruckmesswerte durch die Druckmesseinrichtung 62 in Abhängigkeit von den erfassten Reifendruckwerten.

Die Steuereinheit 66 oder auch die Druckmesseinrichtung 62 selbst kann aus einer Mehrzahl von vorangehenden Reifendruckmesswerten einen momentanen Druckdynamikzustand bzw. eine Klassifizierung für die Druckdynamikzustände in einem Reifen des Fahrzeugs ermitteln, wobei der zeitliche Abstand $\Delta T_{sende}$ zwischen aufeinanderfolgenden Übertragungszeitpunkten der Reifendruckmesswerte und/oder auch der zeitliche Abstand $\Delta T_{mess}$ zwischen aufeinanderfolgenden Erfassungszeitpunkten der Reifendruckmesswerte abhängig von den ermittelten momentanen Druckdynamikzuständen und damit von der Fahrsituation eingestellt werden kann.

Die erfindungsgemäße Vorrichtung 60 zur Überwachung des Reifendrucks ist dabei vorzugsweise in der Felgeninnenseite eines Fahrzeugrades angeordnet, so dass die Vorrichtung die erforderlichen, zu erfassenden physikalischen Größen, wie z. B. Druck und Temperatur, der Gasfüllung eines Fahrzeugreifens detektieren kann.

Zusammenfassend kann also festgestellt werden, dass durch das erfindungsgemäße Verfahren und die erfindungsgemäße Vorrichtung zum Überwachen eines Reifendrucks in einem Fahrzeugreifen ein Drucksensor-IC eingesetzt werden kann, dessen Leistungsverbrauch so gering ist, dass über die angestrebte Lebensdauer des Systems eine kontinuierliche Messung von Druck und Temperatur mit einer festen Messrate erfolgen kann. Diese Messrate wird durch den Zeitabstand festgelegt, in dem eine Änderung des Reifendrucks spätestens erkannt werden soll. Der Hauptleistungsverbrauch in einem derartigen Reifendrucksensorsystem wird dann durch die Sendeeinrichtung bestimmt, die zur Übertragung von aktuellen Reifendruckmesswerten an eine Gegenstelle dient, die die weitere Verarbeitung der Reifendruckmesswerte übernimmt. Die mittlere Leistungsaufnahme des Systems lässt sich also über die Einschalthäufigkeit der Sendeeinheit steuern. Im Gegensatz zu den im Stand der Technik gebräuchlichen Systemen, bei denen die Messhäufigkeit und die Übertragungshäufigkeit von dem über einen zusätzlich angeordneten Beschleunigungssensor oder einen Bewegungsschalter erfassten Fahrzustand abhängt, kann das erfindungsgemäße System den Verlauf des Reifendrucks auswerten und basierend auf diesen Messdaten entscheiden, welche Aktualisierungsrate zur Übermittlung aktueller Reifendruckmesswerte erforderlich ist und/oder welche Erfassungsrate zur Ermittlung aktueller Reifendruckmesswerte erforderlich ist.

Durch das erfindungsgemäße Konzept zum Überwachen eines Reifendruck in einem Reifen eines Fahrzeuges ergeben sich also eine Reihe von Vorteilen.

So können mit batteriebetriebenen Reifendrucksensoranordnungen die erforderlichen Messungen des Reifendrucks über die gesamte angestrebte Lebensdauer, die in der Größenordnung von zehn Jahren liegt, einer Reifendrucksensoranordnung gewährleistet werden, da sich die Reifendrucksensoranordnung in einem Energiesparbetrieb (power saving operation) befindet, so dass die Leistungsaufnahme der Anordnung äußerst gering ist, solange keine kritische Veränderung des Reifendrucks auftritt. Wenn jedoch eine kritische Veränderung des Reifendrucks auftritt, die auf einen Gasverlust bzw. auf eine Beschädigung des Reifens hinweist, wird ein möglichst kurzer Zeitabstand zwischen den übermittelten aktuellen Reifendruckmesswerten verwendet, um äußerst zuverlässig und sehr schnell Änderungen des Reifendrucks erkennen zu können, diese auszuwerten und, wenn erforderlich, diese dem Fahrzeugführer anzuzeigen.

Ferner wird erfindungsgemäß ermöglicht, dass die zeitlichen Abstände $\Delta T_{sende}$ zwischen aufeinanderfolgenden Übertragungszeitpunkten und/oder auch die zeitlichen Abstände $\Delta T_{mess}$ zwischen aufeinanderfolgenden Erfassungszeitpunkten der Reifendruckmesswerte, der Temperatur oder weiterer reifenspezifischer Parameter in Abhängigkeit von dem momentan ermittelten Fahrdynamikzustand in einem Reifen des Fahrzeugs verändert werden können, um aus Sicherheitsgründen bei Fahrzuständen mit steigenden Reifenbelastungen auch eine häufigere Überprüfung der reifenspezifischen Parameter stattfinden zu lassen, um so frühzeitig wie möglich eine Beschädigung, einen Druckverlust, usw. des Fahrzeugreifen erkennen und dies dem Fahrzeugführer anzeigen zu können.

Da bei der vorliegenden Erfindung ferner ein aus den erfassten Reifendruckmesswerten abgeleiteter reifendruckänderungsabhängiger Parameter verwendet wird, aus dem auf die physikalischen Zustandsparameter, d. h. auf den Druck im Reifen abhängig von dem Fahrzustand des Fahrzeugs geschlossen werden kann, ist bei der vorliegenden Erfindung kein zusätzlicher Beschleunigungssensor oder Bewegungsschalter zur Erfassung des Fahrzustands des Fahrzeugs erforderlich, dessen Auswertung einerseits einen zusätzlichen schaltungstechnischen Aufwand bedeutet, und damit andererseits den Stromverbrauch, d. h. die Leistungsaufnahme, der Reifendrucksensoranordnung erhöhen würde.

Bei der vorliegenden Erfindung wird ferner ermöglicht, dass die aktuellen Reifendruckmesswerte (und auch andere ausgewertete Daten) regelmäßig mit einer vorgegebenen Mindesthäufigkeit, z. B. stündlich, an eine Zentraleinheit im Fahrzeug, z. B. den Bordcomputer, übertragen werden, um der Zentraleinheit die Überwachung der Funktionstüchtigkeit der Reifendrucksensoranordnung zu ermöglichen. Andererseits ermöglicht die vorliegende Erfindung, dass Druckänderungen äußerst frühzeitig an die Zentraleinheit übermittelt werden, so dass Beschädigungen des Reifens frühestmöglich erkannt werden können.

Ferner ermöglicht die vorliegende Erfindung, dass zusätzlich zu dem aktuellen Reifendruckmesswert weitere Informationen zu der Zentraleinheit übermittelt werden können, die dann sinnvoll ausgewertet werden können, wenn der Reifendruck in einem bekannten, z. B. konstanten, Zeitabstand erfasst wird. Diese zusätzlichen Informationen sind beispielsweise tiefpassgefilterte Druckwerte oder gleitende Mittelwerte der erfassten Reifendruckmesswerte, die Abweichung der Messung des Reifendruckmesswertes vom Vorgängerwert oder einem tiefpassgefilterten oder gemittelten Wert, oder beispielsweise statistische Werte auf der Grundlage der erfassten Reifendruckmesswerte, wie z. B. Maßzahlen für Gradienten oder Varianzen der Messwerte über einen bestimmten Beobachtungszeitraum.

Diese zusätzlichen Daten können beispielsweise dabei eingesetzt werden, eine exakte Beurteilung des Reifenzustands über eine längere Zeitperiode vorzunehmen.

Bezugszeichenliste

| 10 | Flußdiagramm |
|---|---|
| 12 - 54 | Verfahrensschritte |
| 60 | Vorrichtung zum Überwachen des Reifendrucks |
| 62 | Druckmeßeinrichtung |
| 64 | Sendeeinheit |
| 66 | Steuereinheit |
| 100 | Flußdiagramm |
| 102 - 110 | Verfahrensschritte |

**Patentansprüche**

1. Verfahren zum Überwachen eines Reifendrucks in einem Reifen eines Fahrzeugs, bei dem zeitlich aufeinanderfolgende Reifendruckmesswerte durch eine Druckmesseinrichtung erfasst werden und von einer Sendeeinheit zumindest ein Teil der Reifendruckmesswerte mit einer veränderlichen Häufigkeit zu einer Empfangseinheit übertragen werden, wobei die Häufigkeit von den erfassten Reifendruckmesswerten abgeleitet wird, **dadurch gekennzeichnet, dass** ein Zählerstand eines Zählers beginnend bei einem Startwert dekrementiert oder inkrementiert wird; der Zählerstand mit einem von den erfassten Reifendruckmesswerten abgeleiteten reifendruckänderungsabhängigen Parameter verglichen wird, und eine Übertragung ausgelöst wird, wenn der Zählerstand den reifendruckänderungsabhängigen Parameter erreicht.

2. Verfahren nach Anspruch 1, bei dem aus einer Mehrzahl von Reifendruckmesswerten eine Reifendruckänderung des Reifens ermittelt wird, wobei der zeitliche Abstand ($\Delta T_{mess1}$, $\Delta T_{mess2}$) zwischen aufeinanderfolgenden Erfassungszeitpunkten der Reifendruckmesswerte abhängig von der ermittelten Reifendruckänderung des Reifens eingestellt wird.

3. Verfahren nach Anspruch 1 oder 2, bei dem die Häufigkeit aus einem Druckverlauf, der aus mehreren zeitlich aufeinander folgenden Reifendruckmess werten erhalten wird, abgeleitet wird.

4. Verfahren nach Anspruch 3, bei dem die Häufigkeit aus einer Änderung des Druckverlaufs abgeleitet wird.

5. Verfahren nach Anspruch 3 oder 4, bei dem eine Statistik mit Statistikwerten aus dem Druckverlauf erstellt wird und die Häufigkeit von den Statistikwerten abgeleitet wird.

6. Verfahren nach einem der Ansprüche 1 bis 5, bei dem die Erfassung der Reifendruckmesswerte in festen zeitlichen Abständen erfolgt.

7. Verfahren nach einem der vorhergehenden Ansprüche, bei dem ein Zähler beginnend bei einem Startwert dekrementiert wird; der Zählerstand mit einem von den erfassten Reifendruckmesswerten abgeleiteten reifendruckänderungsabhängigen Parameter verglichen wird; und die Übertragung ausgelöst wird, wenn der Zählerstand den Parameter erreicht oder unterschreitet.

8. Verfahren nach Anspruch 7, bei dem der Zähler nach jeder Übertragung auf einen Startwert zurückgesetzt wird.

9. Verfahren nach einem der Ansprüche 1 - 6, bei dem der Zählerstand nach jeder Erfassung des Reifendruckmesswerts inkrementiert wird und um einen von den erfassten Reifendruckmesswerten abgeleiteten Parameter erhöht wird; und die Übertragung ausgelöst wird, wenn der Zählerstand einen vorgegebenen Wert erreicht oder überschreitet.

10. Verfahren nach einem der Ansprüche 1 - 6, bei dem der Zählerstand nach jeder Erfassung des Reifendruckmesswertes inkrementiert wird und mit einem von den erfassten Reifendruckmesswerten abgeleiteten Parameter multipliziert wird; und die Übertragung ausgelöst wird, wenn der Zählerstand einen vorgegebenen Wert erreicht oder überschreitet.

11. Verfahren nach einem der vorangehenden Ansprüche, bei dem der Zählerstand des Zählers mit einem von dem Zählerstand abhängigen Inkrement oder Dekrement verändert wird, so dass sich der Zählerstand nicht linear ändert.

12. Verfahren nach Anspruch 11, bei dem der Zählerstand mit einer nicht-linearen Funktion gewichtet wird.

13. Verfahren nach Anspruch 11 oder 12, bei dem die nichtlineare Funktion durch eine Sprungantwort oder eine Impulsantwort eines digitalen Filters erzeugt wird.

14. Verfahren nach einem der vorangehenden Ansprüche, bei dem der von den erfassten Reifendruckmesswerten abgeleitete Parameter die Differenz oder der Betrag der Differenz zweier aufeinander folgender Reifendruckmesswerte ist.

15. Verfahren nach einem der vorangehenden Ansprüche, bei dem der von den erfassten Reifendruckmesswerten abgeleitete Parameter das Quadrat der Differenz zweier aufeinander folgender Reifendruckmesswerte ist.

16. Verfahren nach einem der vorangehenden Ansprüche, bei dem der von den erfassten Reifendruckmesswerten abgeleitete Parameter die Differenz oder der Betrag der Differenz des erfassten Reifendruckmesswertes zu einem tiefpassgefilterten oder gemittelten Wert einer Mehrzahl von erfassten Reifendruckmesswerten ist.

17. Verfahren nach einem der vorangehenden Ansprüche, bei dem der von den erfassten Reifendruckmesswerten abgeleitete Parameter das Quadrat der Differenz des Reifendruckmesswertes zu einem tiefpassgefilterten oder gemittelten Wert einer Mehrzahl von Reifendruckmesswerten ist.

18. Verfahren nach einem der vorangehenden Ansprüche, bei dem der von den erfassten Reifendruckmesswerten abgeleitete Parameter die Standardabweichung einer Mehrzahl von zurückliegenden Reifendruckmesswerten ist.

19. Verfahren nach einem der vorangehenden Ansprüche, bei dem der von den erfassten Reifendruckmesswerten abgeleitete Parameter ein gemittelter oder gefilterter Wert ist.

20. Verfahren nach einem der vorangehenden Ansprüche, bei dem der Zähler nach jeder Übertragung auf einen Startwert zurückgesetzt wird.

21. Verfahren nach Anspruch 1, bei dem der reifendruckänderungsabhängige Parameter in Form einer statistischen Messgröße von den erfassten Reifendruckmesswerten abgeleitet wird und die Übertragung ausgelöst wird, wenn der aktuelle Reifendruckmesswert die statistische Messgröße übersteigt.

22. Verfahren nach Anspruch 1, bei dem der reifendruckänderungsabhängige Parameter in Form einer statistischen Messgröße von den erfassten Reifendruckmesswerten abgeleitet wird und die Übertragung ausgelöst wird, wenn die statistische Messgröße einen vorgegebenen Wert übersteigt.

23. Verfahren nach einem der vorhergehenden Ansprüche, bei dem die Reifendruckmesswerte mittels erfasster Temperaturwerte in temperatur-kompensierte Reifendruckmesswerte umgewandelt werden, aus denen die Häufigkeit abgeleitet wird.

24. Verfahren nach einem der vorhergehenden Ansprüche, bei dem bei der Übertragung eines Reifendruckmesswertes ferner weitere ermittelte physikalische oder statistische auf den Reifendruck bezogene Daten übermittelt werden.

25. Verfahren nach Anspruch 24, bei dem die Daten eine Differenz zweier aufeinanderfolgender Reifendruckmesswerte, einen tiefpassgefilterten Reifendruckmesswert, einen über mehrere zurückliegende Reifendruckmesswerte gemittelten Durchschnittswert, die Standardabweichung gegenüber einem Mittelwert, den Durchschnitt des Rauschens gegenüber einem Mittelwert der Reifendruckmesswerte und/oder einen Quotient aus dem Reifendruckmesswert und dem Temperaturwert umfassen.

26. Computer-Programm mit einem Programmcode zur Durchführung des Verfahrens zur Überwachung des Reifendrucks in einem Fahrzeugreifen nach einem der vorhergehenden Ansprüche, wenn das Computer-programm auf einem Computer abläuft.

27. Vorrichtung (60) zum Überwachen eines Reifendrucks in einem Reifen eines Fahrzeugs, mit:

einer Druckmesseinrichtung (62) zum Erfassen zeitlich aufeinanderfolgender Reifendruckmesswerte,

einer Sendeeinheit (64) zum Übertragen zumindest eines Teils der Reifendruckmesswerte zu einer Empfangseinheit,

einer Steuereinheit (66) zum Steuern der Häufigkeit der Übertragung der Reifendruckmesswerte durch die Sendeeinheit in Abhängigkeit von den erfassten Reifendruckmesswerten, **dadurch gekennzeichnet, dass** die Steuereinheit ferner folgende Merkmale aufweist:

einem Zähler, dessen Zählerstand beginnend bei einem Startwert dekrementierbar oder inkrementierbar ist;

einer Einrichtung zum Vergleichen des Zählerstands mit einem von den erfassten Reifendruckmesswerten abgeleiteten reifendruckänderungsabhängigen Parameter, und

einer Einrichtung zum Auslösen einer Übertragung durch die Sendeeinheit, wenn der Zählerstand den reifendruckänderungsabhängigen Parameter erreicht.

## Claims

1. Method of monitoring tire pressure in a tire of a vehicle, wherein temporally successive tire pressure measured values are sensed by pressure measuring means, and at least part of the tire pressure measured values is transmitted from a transmitting unit to a receiving unit with varying frequency of occurrence, wherein the frequency of occurrence is derived from the sensed tire pressure measured values, **characterized in that**
a count of a counter is decremented or incremented beginning from a starting value;
the count is compared with a tire pressure change dependent parameter derived from the sensed tire pressure measured values, and
transmission is triggered when the count reaches the tire pressure change dependent parameter.

2. Method of claim 1, wherein a tire pressure change is ascertained from a plurality of tire pressure measured values, wherein the temporal distance ($\Delta T_{meas1}$, $\Delta T_{meas2}$) between successive detection time instants of the tire pressure measured values is adjusted depending on the ascertained tire pressure change of the tire.

3. Method of claims 1 or 2, wherein the frequency of occurrence is derived from the pressure course obtained from several temporally successive tire pressure measured values.

4. Method of claim 3, wherein the frequency of occurrence is derived from a change of the pressure course.

5. Method of claims 3 or 4, wherein statistics are created with statistical values from the pressure course, and the frequency of occurrence is derived from statistical values.

6. Method of one of claims 1 to 5, wherein detection of the tire pressure measured values takes place in a fixed time raster.

7. Method of one of the preceding claims, wherein a counter is decremented beginning with a starting value;
the count is compared with a tire pressure change dependent parameter derived from the sensed tire pressure measured values; and
the transmission is triggered when the count reaches or falls short of the parameter.

8. Method of claim 7, wherein the counter is reset to a starting value after each transmission.

9. Method of one of claims 1 to 6, wherein the count is incremented after each detection of the tire pressure measured values and increased by a parameter derived from the sensed tire pressure measured values; and
the transmission is triggered when the count reaches or exceeds a default value.

10. Method of one of claims 1 to 6, wherein the count is incremented after each detection of the tire pressure measured value and is multiplied by a parameter derived from the sensed tire pressure measured values; and
the transmission is triggered when the count reaches or exceeds a default value.

11. Method of one of the preceding claims, wherein the count of the counter is changed with an increment or a decrement dependent on the count so that the count does not change in a linear manner.

12. Method of claim 11, wherein the count is weighted with a nonlinear function.

13. Method of claims 11 or 12, wherein the nonlinear function is generated by a step response or an impulse response of a digital filter.

14. Method of one of the preceding claims, wherein the parameter derived from the sensed tire pressure measured values is the difference or the magnitude of the difference of two successive tire pressure measured values.

15. Method of one of the preceding claims, wherein the parameter derived from the sensed tire pressure measured values is the square of the difference of two successive tire pressure measured values.

16. Method of one of the preceding claims, wherein the parameter derived from the sensed tire pressure measured values is the difference or the magnitude of the difference of the sensed tire pressure measured values to a low-pass filtered or averaged value of a plurality of sensed tire pressure measured values.

17. Method of one of the preceding claims, wherein the parameter derived from the sensed tire pressure measured values is the square of the difference of the tire pressure measured value to a low-pass filtered or averaged value of a plurality of tire pressure measured values.

18. Method of one of the preceding claims, wherein the parameter derived from the sensed tire pressure measured values is the standard deviation of a plurality of past tire pressure measured values.

19. Method of one of the preceding claims, wherein the parameter derived from the sensed tire pressure measured values is an averaged or filtered value.

20. Method of one of the preceding claims, wherein the counter is reset to a starting value after each transmission.

21. Method of claim 1, wherein the tire pressure change dependent parameter in the form of a statistical measured quantity is derived from the sensed tire pressure measured values, and the transmission is triggered when the current tire pressure measured value exceeds the statistical measured quantity.

22. Method of claim 1, wherein the tire pressure change dependent parameter in the form of a statistical measured quantity is derived from the sensed tire pressure measured values, and the transmission is triggered when the statistical measured quantity exceeds a default value.

23. Method of one of the preceding claims, wherein the tire pressure measured values are converted to temperature-compensated tire pressure measured values from which the frequency of occurrence is derived by means of sensed temperature values.

24. Method of one of the preceding claims, wherein in the transmission of a tire pressure measured value also further ascertained physical or statistical data related to the tire pressure is communicated.

25. Method of claim 24, wherein the data includes a difference of two successive tire pressure measured values, a low-pass filtered tire pressure measured value, an average averaged over several past tire pressure measured values, the standard deviation with respect to a mean value, the average of the noise with reference to a mean value of the tire pressure measured values and/or a quotient of the tire pressure measured value and the temperature value.

26. Computer program with a program code for performing the method of monitoring the tire pressure in a vehicle tire of one of the preceding claims, when the computer program is executed on a computer.

27. Apparatus (60) for monitoring tire pressure in a tire of a vehicle, comprising:

pressure measuring means (62) for detecting temporally successive tire pressure measured values,

a transmitting unit (64) for transmitting at least part of the tire pressure measured values to a receiving unit,

a control unit (66) for controlling the frequency of occurrence of the transmission of the tire pressure measured values by the transmitting unit depending on the sensed tire pressure measured values, **characterized in that** the control unit further comprises:

a counter the count of which is decrementable or incrementable beginning from a starting value;

means for comparing the count with a tire pressure change dependent parameter derived from the sensed tire pressure measured values, and

means for triggering a transmission by the transmitting unit when the count reaches the tire pressure change dependent parameter.

**Revendications**

1. Procédé de contrôle de la pression d'un pneumatique d'un véhicule automobile, dans lequel on relève des valeurs de mesure de la pression du pneumatique qui se succèdent dans le temps par un dispositif de mesure de la pression et on transmet au moins une partie des valeurs de mesure de la pression du pneumatique à une fréquence variable d'une unité d'émission à une unité de réception, la fréquence étant déduite des valeurs de mesure de la pression qui sont relevées, **caractérisé en ce que**

on décrémente ou on incrémente un état d'un compteur en commençant à une valeur de début ;

on compare l'état du compteur à un paramètre qui dépend de la variation de la pression du pneumatique déduite des valeurs de mesure de la pression du pneumatique qui sont relevées ; et

on déclenche une transmission lorsque l'état du compteur atteint le paramètre qui dépend de la variation de la pression du pneumatique.

2. Procédé suivant la revendication 1, dans lequel on détermine, à partir d'une multiplicité de valeurs de mesure de la pression du pneumatique, une variation de la pression du pneumatique, l'écart ($\Delta T_{mess1}$, $\Delta T_{mess2}$) dans le temps entre des instants de relevé qui se succèdent des valeurs de mesure de la pression du pneumatique étant réglé en fonction de la variation déterminée de la pression du pneumatique.

3. Procédé suivant la revendication 1 ou 2, dans lequel on déduit la fréquence d'une courbe de pression qui est obtenue à partir de plusieurs valeurs de mesure de la pression du pneumatique se succédant dans le temps.

4. Procédé suivant la revendication 3, dans lequel on déduit la fréquence à partir d'une variation de la courbe de pression.

5. Procédé suivant la revendication 3 ou 4, dans lequel on établit une statistique par des valeurs de statistique à partir de la courbe de pression et on déduit la fréquence des valeurs de statistique.

6. Procédé suivant l'une des revendications 1 à 5, dans lequel on effectue le relevé des valeurs de mesure de la pression du pneumatique à des intervalles fixes dans le temps.

7. Procédé suivant l'une des revendications précédentes, dans lequel on décrémente un compteur en commençant à une valeur de début ;

on compare l'état du compteur à un paramètre qui dépend de la variation de la pression de référence et qui est déduit des valeurs de mesure de la pression de référence qui sont relevées ; et

on déclenche la transmission lorsque l'état du compteur atteint le paramètre ou lui devient inférieur.

**8.** Procédé suivant la revendication 7, dans lequel on remet le compteur à une valeur de début après chaque transmission.

**9.** Procédé suivant l'une des revendications 1 à 6, dans lequel on incrémente l'état du compteur après chaque relevé de la valeur de mesure de la pression du pneumatique et on augmente un paramètre dérivé des valeurs de mesure de la pression du pneumatique qui sont relevées ; et

on déclenche la transmission lorsque l'état du compteur atteint une valeur prescrite ou la dépasse.

**10.** Procédé suivant l'une des revendications 1 à 6, dans lequel on incrémente l'état du compteur après chaque relevé de la valeur de mesure de la pression du pneumatique et on la multiplie par un paramètre déduit des valeurs de mesure de la pression du pneumatique qui sont relevées ; et

on déclenche la transmission lorsque l'état du compteur atteint ou dépasse une valeur prescrite.

**11.** Procédé suivant l'une des revendications précédentes, dans lequel on modifie l'état du compteur par un incrément ou un décrément qui dépend de l'état du compteur, de sorte que l'état du compteur ne se modifie pas linéairement.

**12.** Procédé suivant la revendication 11, dans lequel on pondère l'état du compteur par une fonction non linéaire.

**13.** Procédé suivant la revendication 11 ou 12, dans lequel on produit la fonction non linéaire par une réponse à saut ou par une réponse impulsionnelle d'un filtre numérique.

**14.** Procédé suivant l'une des revendications précédentes, dans lequel le paramètre déduit des valeurs de mesure de la pression du pneumatique qui sont relevées est la différence ou la valeur absolue de la différence entre deux valeurs de mesure de la pression du pneumatique qui se succèdent.

**15.** Procédé suivant l'une des revendications précédentes, dans lequel le paramètre déduit des valeurs de mesure de la pression du pneumatique qui sont relevées est le carré de la différence de deux valeurs de mesure de la pression du pneumatique qui se succèdent.

**16.** Procédé suivant l'une des revendications précédentes, dans lequel le paramètre déduit des valeurs de mesure de la pression du pneumatique qui sont détectées est la différence ou la valeur absolue de la différence entre la valeur de mesure de la pression du pneumatique qui est relevée et une valeur, filtrée par un passe-bas ou dont on a fait la moyenne, d'une multiplicité de valeurs de mesure de la pression du pneumatique qui ont été relevées.

**17.** Procédé suivant l'une des revendications précédentes, dans lequel le paramètre déduit des valeurs de mesure de la pression du pneumatique qui sont relevées est le carré de la différence entre la valeur de mesure de la pression du pneumatique et une valeur, filtrée en passe-bas ou dont on a fait la moyenne, d'une multiplicité de valeurs de mesure de la pression du pneumatique.

**18.** Procédé suivant l'une des revendications précédentes, dans lequel le paramètre déduit des valeurs de mesure de la pression du pneumatique qui sont relevées est l'écart-type d'une multiplicité de valeurs de mesure de la pression du pneumatique précédentes.

**19.** Procédé suivant l'une des revendications précédentes, dans lequel le paramètre déduit des valeurs de mesure de la pression du pneumatique qui sont relevées est une valeur dont on a fait la moyenne ou qui est filtrée.

**20.** Procédé suivant l'une des revendications précédentes, dans lequel le compteur est remis à une valeur de début après chaque transmission.

**21.** Procédé suivant la revendication 1, dans lequel on déduit le paramètre qui dépend de la variation de la pression du pneumatique sous la forme d'une grandeur de mesure statistique, les valeurs de mesure de la pression du pneumatique qui ont été relevées et on déclenche la transmission lorsque la valeur de mesure de la pression du pneumatique présente dépasse la grandeur de mesure statistique.

**22.** Procédé suivant la revendication 1, dans lequel on déduit le paramètre qui dépend de la variation de la pression du pneumatique sous la forme d'une grandeur de mesure statistique, les valeurs de mesure de la pression du pneumatique qui ont été relevées et on déclenche la transmission lorsque la grandeur de mesure statistique dépasse une valeur prescrite.

**23.** Procédé suivant l'une des revendications précédentes, dans lequel on transforme les valeurs de mesure de la pression du pneumatique, au moyen de valeurs de température relevées, en valeurs de mesure de la pression du pneumatique compensées en température dont on déduit la fréquence.

**24.** Procédé suivant l'une des revendications précédentes, dans lequel, lors de la transmission d'une valeur de mesure de la pression du pneumatique, on transmet, en outre, d'autres données physiques ou statistiques se rapportant à la pression du pneumatique qui ont été déterminées.

25. Procédé suivant la revendication 24, dans lequel les données comprennent une différence de deux valeurs de mesure de la pression du pneumatique qui se succèdent, une valeur de mesure de la pression du pneumatique ayant subi un filtrage passe-bas, une valeur moyenne dont on a fait la moyenne sur plusieurs valeurs de mesure de la pression du pneumatique précédentes, l'écart-type par rapport à une valeur moyenne, la moyenne du bruit par rapport à une valeur moyenne des valeurs de mesure de la pression du pneumatique et/ou un quotient de la valeur de mesure de la pression du pneumatique par la valeur de la température.

26. Programme informatique comprenant un code programme pour la mise en oeuvre du procédé de contrôle de la pression du pneumatique d'un véhicule suivant l'une des revendications précédentes lorsque le programme informatique se déroule sur un ordinateur.

27. Dispositif (60) de contrôle de la pression d'un pneumatique d'un véhicule comprenant :

   un dispositif (62) de mesure de la pression pour relever des valeurs de mesure de la pression du pneumatique qui se succèdent dans le temps ;
   une unité (64) d'émission pour transmettre au moins une partie des valeurs de mesure de la pression du pneumatique à une unité de réception ;
   une unité (66) de commande pour commander la fréquence de la transmission des valeurs de mesure de la pression du pneumatique par l'unité d'émission en fonction des valeurs de mesure de la pression du pneumatique qui sont relevées, **caractérisé en ce que** l'unité de commande a, en outre, les caractéristiques suivantes :

      un compteur dont l'état peut être décrémenté ou incrémenté en commençant à une valeur de début ;
      un dispositif de comparaison de l'état du compteur à un paramètre qui dépend de la variation de la pression du pneumatique déduite des valeurs de mesure de la pression du pneumatique qui ont été relevées ; et
      un dispositif de déclenchement d'une transmission par l'unité d'émission lorsque l'état du compteur atteint le paramètre qui dépend de la variation de la pression du pneumatique.

ZEITGEBER INKREMENTIEREN — 54

ANSCHALT-ZEITPUNKT — 56

SPI-AKTIVIERUNG — 62

ANALOGEN UND DIGITALEN SCHALTUNGSBEREICH AKTIVIEREN — 60

10

DRUCKWERT MESSEN — 12

SCHWELLENWERT-ZÄHLER DEKREMENTIEREN — 24

IIR FILTER D, T, BSP -> ΦD, ΦT, ΦBSP — 26

DIFFERENZ Δ ZWISCHEN MESSWERT UND VORHERGEHENDEM MESSWERT BERECHNEN — 28

23

AKTUELLEN MESSWERT SPEICHERN — 30

IIR FILTER $\Delta^2 -> \Phi\Delta^2$ — 32

ZÄHLWERT = 0 — 34

$(2^{n1}) * \Phi\Delta^2$ UNTERHALB ZÄHLWERT — 36

$\Delta^2$ UNTERHALB $(2^{n2}) * \Phi\Delta^2$ — 38

TEMPERATUR — 14

BATTERIE — 16

TEMPERATUR MESSEN — 18

BATTERIESPANNUNG MESSEN — 20

ANALOGEN SCHALTUNGSBEREICH ABSCHALTEN — 22

KOMPENSIERTE T BERECHNEN — 43A

T-KOMPENSIERTE DRUCKKOEFFIZIENTEN BERECHNEN — 43B

KOMPENSIERTE DRUCKMESSWERTE BERECHNEN — 43C

OPTIONAL — 43

40

AKTIVIERUNG EINES µC ODER DER SENDEEINHEIT — 42

SPI AKTIV — 44

ABSCHALTUNG VON EINER HAUPTEINHEIT — 46

ZÄHLER ZURÜCKSETZEN — 48

DIGITALEN SCHALTUNGSBEREICH ABSCHALTEN — 52

ZEITGEBER ZURÜCKSETZEN — 50

FIG 1

FIG 2A

STILLSTAND

WERTE

ZÄHLER Ⅲ
DRUCK Ⅰ
BETRAG Ⅱ
DER
MESSWERT-
ÄNDERUNG

Ⅲ

Ⅰ

Ⅱ

UPDATE
SENDEN
& RESET

ZEIT

FIG 2B

NORMALE FAHRT

WERTE

ZÄHLER
DRUCK
BETRAG
DER
MESSWERT-
ÄNDERUNG

Ⅲ

Ⅱ
Ⅰ

UPDATE
SENDEN
&RESETEN

UPDATE
SENDEN
&RESETEN

ZEIT

FIG 2C

REIFEN DEFEKT

WERTE

ZÄHLER
DRUCK
BETRAG
DER
MESSWERT-
ÄNDERUNG

Ⅲ

Ⅱ

UPDATE SENDEN & RESET

Ⅰ

G

ZEIT

FIG 3A

FIG 3B

FIG 4A

FIG 4B

FIG 4C

SCHNELLE DRUCKÄNDERUNG

REIFENDRUCK

REIFENDRUCK-MESSWERTE

ÜBERMITTELTE REIFENDRUCK-MESSWERTE

$\Delta T_{MAX}$

$\Delta T_{MIN}$

## FIG 5A

DRUCKVERLAUF IM REIFEN

(mbar)

I DRUCKMESSWERTE
II KURZZEITMITTELWERT

## FIG 5C

(mbar^2)

IV ABWEICHUNGSQUADRATE ———
V ABWEICHUNGSQUADRATE GEFILTERT ———
VI ZUSTAND ———

FAHREN

RUHE

$t_a$

$t_b$

## FIG 5B

(mbar)

PRESAURE VARIATION [FRONT WHEEL]

DIFFERENCE III

FIG 6

# FIG 7

<u>60</u>

62

64

SENSOR-
EINHEIT

SENDE-
EINHEIT

66

STEUER-
EINHEIT